# EUROPEAN PATENT SPECIFICATION

(11) **EP 3 389 327 B1**
(45) Date of publication and mention of the grant of the patent: **18.03.2020**
(21) Application number: 15911744.9
(22) Date of filing: 29.12.2015
(51) Int. Cl.: H04W 72/08

(54) **TERMINAL DEVICE, NETWORK DEVICE, DATA TRANSMISSION METHOD, AND WIRELESS COMMUNICATION SYSTEM**
ENDGERÄTEVORRICHTUNG, NETZWERKVORRICHTUNG, DATENÜBERTRAGUNGSVERFAHREN UND DRAHTLOSKOMMUNIKATIONSSYSTEM
DISPOSITIF TERMINAL, DISPOSITIF DE RÉSEAU, PROCÉDÉ DE TRANSMISSION DE DONNÉES ET SYSTÈME DE COMMUNICATION SANS FIL

(43) Date of publication of application: 17.10.2018
(73) Proprietor: Huawei Technologies Co., Ltd., Longgang District Shenzhen, Guangdong 518129 (CN)
(72) Inventor: ZHANG, Peng, Shenzhen Guangdong 518129 (CN)
(74) Representative: Thun, Clemens
(86) International application number: PCT/CN2015/099529
(87) International publication number: WO 2017/113113

(56) References cited:
- WO-A1-2010/016831
- WO-A1-2011/078726
- WO-A1-2015/060761
- CN-A- 103 580 814
- CN-A- 104 219 021
- CN-A- 104 219 021
- CN-A- 105 471 558

## Description

### TECHNICAL FIELD

This application relates to the field of wireless communications technologies, and in particular, to a terminal device, a network device, a data transmission method, and a wireless communications system.

### BACKGROUND

In a wireless communications system, a multiple-antenna technology may be used. A plurality of antennas are used at both a transmit end and a receive end, thereby expanding a space domain and improving a system capacity.

Downlink single user multiple-input multiple-output (Single User Multiple-Input Multiple-Output, SU-MIMO) is one of multiple-antenna technologies.

In a conventional downlink SU-MIMO technology, a plurality of data streams are preprocessed by a base station, and are transmitted by a plurality of antennas of the base station by using same time-frequency resources.

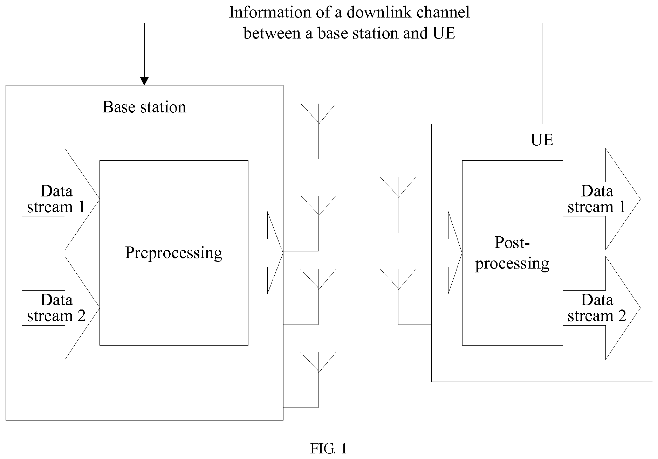

As shown in FIG. 1, a signal transmitted by a base station is received by a plurality of antennas on user equipment (User Equipment, UE). The base station performs preprocessing by using downlink channel information of downlink channels between transmit antennas of the base station and receive antennas of the UE, so that there is relatively minor interference between a plurality of data streams received by the UE, and the plurality of data streams can be correctly received by the UE.

Multi-user multiple-input multiple-output (Multi-User Multiple-Input Multiple-Output, MU-MIMO) is another multiple-antenna technology.

In the MU-MIMO technology, a plurality of data streams are sent to at least two UEs (UE 1 and UE 2).

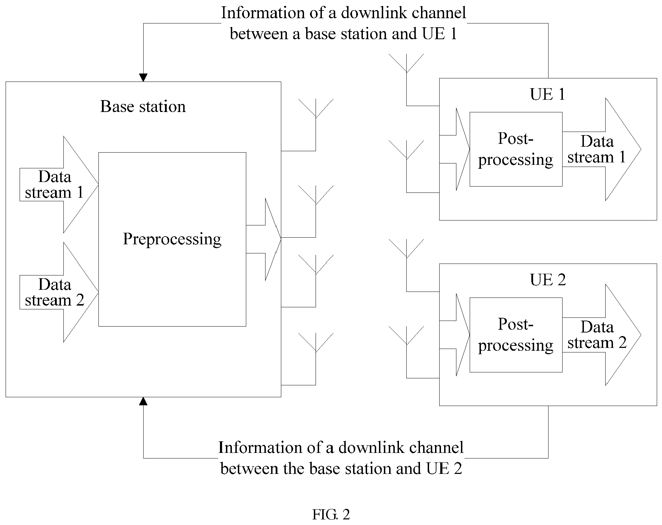

As shown in FIG. 2, a plurality of data streams are preprocessed by a base station, and are transmitted by a plurality of antennas of the base station by using same time-frequency resources. Antennas of each UE receive a data stream that is sent to the UE. The base station performs preprocessing by using information of downlink channels between transmit antennas of the base station and receive antennas of each UE, so that there is relatively minor interference between data streams received by different UEs, and each UE can correctly receive a data stream that is sent to the UE.

When using the MU-MIMO technology, the base station can simultaneously send a plurality of data streams to a plurality of UEs, whereas when using SU-MIMO, the base station can send a plurality of data streams only to single UE. MU-MIMO generally has better downlink throughput performance than SU-MIMO.

When some UEs do not have a data transmission requirement or have a relatively low data transmission requirement, MU-MIMO is downgraded to SU-MIMO. As a result, the base station cannot deliver a data stream by using the MU-MIMO technology, or overall throughput performance of a communications system is not high even when the base station can deliver a data stream by using the MU-MIMO technology.

Further, WO 2010/016831 A refers to a MIMO stream transmitted by a source (S) is at least partially received by a relay (R) and a destination (D). An example includes performing a partial detection of some of the streams in the relay, and forwarding the detected streams to the destination. The destination detects the message that it received from the relay, and cancels its effect from the original received copy from the source. Then the destination performs a K-best detection of the remaining streams that were not forwarded by the relay.

### SUMMARY

In view of this, a terminal device, a network device, and a data transmission method are provided, to send a plurality of data streams to a terminal device by using an MU-MIMO technology and increase a throughput of an entire communications system.

This problem is solved by the subject matter of the independent claims.

According to a first aspect, this application provides a first terminal device, including:
a transceiver module, configured to receive a data stream of the first terminal device from a second terminal device; and
a processing module, configured to process the data stream received by the receiving module, where
the second terminal device is configured to receive, from a network device that serves the first terminal device, the data stream that is of the first terminal device and that is sent by the network device by using a multi-user multiple-input multiple-output MU-MIMO technology.
In this implementation, when the network device sends the data stream of the first terminal device to the first terminal device, the second terminal device also participates in MU-MIMO downlink data transmission of the first terminal device. Even if only the data stream of the first terminal device is transmitted or only a relatively small amount of data of the second terminal device is transmitted, a channel between the second terminal device and the network device is not wasted, and instead, is used to help transmit the data stream of the first terminal device. This avoids occurrence of a problem that MU-MIMO is downgraded to SU-MIMO because the network device cannot deliver data streams to a plurality of terminal devices by using the MU-MIMO technology, thereby increasing a throughput of a communications system.

In addition, this also avoids that, in a scenario in which a plurality of terminal devices simultaneously have a data transmission requirement but some terminal devices have a relatively low data transmission requirement, transmission capabilities of the terminal devices that have a relatively low data transmission requirement are not fully utilized, thereby also increasing the throughput of the communications system.

With reference to the first aspect, in a first possible implementation, the processing module is further configured to: before the transceiver module receives the data stream of the first terminal device, determine the second terminal device.

The first terminal device determines the second terminal device, so that the first terminal device may learn of a terminal device that helps forward the data stream of the first terminal device, and receive, in a targeted manner, the data stream of the first terminal device from the terminal device.

With reference to the first possible implementation of the first aspect, in a second possible implementation, the transceiver module is further configured to:
after the processing module determines the second terminal device and before the processing module processes the data stream received by the transceiver module, send a first auxiliary notification message to the network device, where
the first auxiliary notification message is used to notify the network device that the second terminal device receives data of the first terminal device from the network device.

In this possible implementation, the second terminal device notifies the network device that the second terminal device can receive the data stream of the first terminal device, so that the network device may learn of a terminal device that can send the data stream for the first terminal device.

With reference to the first or the second possible implementation of the first aspect, in a third possible implementation,
the transceiver module is further configured to: before the processing module determines the second terminal device, send an auxiliary request message to at least one terminal device, where the auxiliary request message is used to query the at least one terminal device whether the at least one terminal device can receive the data stream of the first terminal device and send the received data stream of the first terminal device to the first terminal device; and
the processing module is specifically configured to: determine a terminal device, in the at least one terminal device, that sends an auxiliary response message, as the second terminal device, where the auxiliary response message is used to notify the first terminal device that the terminal device sending the auxiliary response message can receive the data stream of the first terminal device and send the received data stream of the first terminal device to the first terminal device.

In this possible implementation, the first terminal device queries another terminal device, so that the first terminal device determines the second terminal device that can receive the data stream for the first terminal device.

With reference to any one of the first to the third possible implementations of the first aspect, in a fourth possible implementation, the transceiver module is further configured to: before the processing module determines the second terminal device, receive a first control message sent by the network device, where the first control message instructs the first terminal device to determine the second terminal device.

In this implementation, the network device triggers, by sending the first control message, the first terminal device to determine the second terminal device that helps forward the data stream of the first terminal device.

With reference to any one of the first aspect or the foregoing possible implementations of the first aspect, in a fifth possible implementation, the transceiver module is further configured to:
before receiving the data stream of the first terminal device from the second terminal device, send downlink channel information of the second terminal device to the network device, where the downlink channel information of the second terminal device is used by the network device to send the data stream of the first terminal device to the second terminal device by using the MU-MIMO technology.

In this possible implementation, the first terminal device sends the downlink channel information of the second terminal device, so that when the second terminal device cannot send the downlink channel information to the network device, the network device can still learn of the downlink channel information of the second terminal device, and therefore, can send the data stream of the first terminal device to the second terminal device based on the obtained downlink channel information of the second terminal device by using the MU-MIMO technology.

With reference to the fifth possible implementation of the first aspect, in a sixth possible implementation, the transceiver module is further configured to:
before sending the downlink channel information of the second terminal device to the network device, receive a second control message sent by the network device, where the second control message is used to instruct the first terminal device to obtain the downlink channel information of the second terminal device.

In this implementation, a control message of the network device is received, to trigger the first terminal device to obtain the downlink channel information of the second terminal device.

With reference to any one of the first aspect or the first to the fourth possible implementations of the first aspect, in a sixth possible implementation, the transceiver module is further configured to:
after the processing module determines the second terminal device, instruct the second terminal device to send downlink channel information of the second terminal device to the network device.

With reference to any one of the first aspect or the foregoing possible implementations of the first aspect, in an eighth possible implementation, the transceiver module is further configured to:
send downlink channel information of the first terminal device to the network device, where the downlink channel information of the first terminal device is used by the network device to send the data stream of the first terminal device to the second terminal device by using the MU-MIMO technology.

When the network device uses the MU-MIMO technology, a downlink channel of the first terminal device generates interference to a data stream transmitted on a downlink channel of the second terminal device. Therefore, in this implementation, the network device may reduce, based on the obtained downlink channel information of the first terminal device, interference brought by the downlink channel of the first terminal device when the network device sends the data stream of the first terminal device to the second terminal device by using the MU-MIMO technology.

With reference to any one of the first aspect or the foregoing possible implementations of the first aspect, in a ninth possible implementation, the second terminal device has a data transmission requirement, or the second terminal device does not have a data transmission requirement.

In this possible implementation, if the second terminal device has a data transmission requirement, the second terminal device may receive a downlink data stream of the first terminal device in addition to receiving a downlink data stream of the second terminal device. In this way, a data transmission capability of the second terminal device can be fully utilized, thereby increasing an overall throughput of a communications system.

In this possible implementation, if the second terminal device does not have a data transmission requirement, based on a processing manner of a current LTE system, when only the first terminal device has a data transmission requirement, MU-MIMO cannot be implemented actually and can only be downgraded to SU-MIMO. However, in this possible implementation, even when the second terminal device does not have a data transmission requirement, the second terminal device may also be used to transmit a downlink data stream of the first terminal device. In this way, at least two terminal devices implement MU-MIMO, a data transmission capability of the second terminal device is utilized, and an overall throughput of a communications system is increased.

According to a second aspect, this application provides a second terminal device, including:
a processing module, configured to determine that the second terminal device receives, from a network device that serves a first terminal device, a data stream that is of the first terminal device and that is sent by the network device by using an MU-MIMO technology;
a receiving module, configured to receive the data stream that is of the first terminal device and that is sent by the network device by using the MU-MIMO technology; and
a sending module, configured to send, to the first terminal device, the data stream that is of the first terminal device and that is received by the receiving module.

In this implementation, the second terminal device participates in MU-MIMO downlink data transmission of the first terminal device. Even if only the data stream of the first terminal device is transmitted or only a relatively small amount of data of the second terminal device is transmitted, a channel between the second terminal device and the network device is not wasted, and instead, is used to help transmit the data stream of the first terminal device. This avoids occurrence of a problem that MU-MIMO is downgraded to SU-MIMO because the network device cannot deliver data streams to a plurality of UEs by using the MU-MIMO technology, thereby increasing a throughput of a communications system.

In addition, this also avoids that, in a scenario in which a plurality of UEs simultaneously have a data transmission requirement but some UEs have a relatively low data transmission requirement, transmission capabilities of the UEs that have a relatively low data transmission requirement are not fully utilized, thereby also increasing the throughput of the communications system.

With reference to the second aspect, in a first possible implementation, the sending module is further configured to: before the receiving module receives the data stream of the first terminal device, send downlink channel information of the second terminal device to the network device, where the downlink channel information of the second terminal device is used by the network device to send the data stream of the first terminal device to the second terminal device by using the MU-MIMO technology.

In this possible implementation, regardless of whether the second terminal device has a data transmission requirement, the second terminal device sends the downlink channel information of the second terminal device to the network device. In this way, the network device can determine, based on the downlink channel information of the second terminal device, whether data streams may be delivered to the first terminal device and the second terminal device in parallel by using the MU-MIMO technology.

With reference to the first possible implementation of the second aspect, in a second possible implementation, the receiving module is further configured to: before the sending module sends the downlink channel information of the second terminal device to the network device, receive a notification sent by the first terminal device or the network device, where the notification is used to instruct the second terminal device to send the downlink channel information of the second terminal device to the network device.

With reference to the first possible implementation of the second aspect, in a third possible implementation, the sending module is specifically configured to:
after the processing module confirms that the first terminal device sends downlink channel information of the first terminal device to the network device, send the downlink channel information of the second terminal device to the network device, where the downlink channel information of the second terminal device is used by the network device to send the data stream of the first terminal device to the second terminal device by using the MU-MIMO technology.

In this possible implementation, after learning that the first terminal device sends the downlink channel information of the first terminal device to the network device, the second terminal device sends the downlink channel information of the second terminal device to the network device. This avoids that the second terminal device sends useless downlink channel information, a processing capability of the second terminal device is wasted, and an uplink resource between the second terminal device and the network device is occupied.

With reference to any one of the second aspect or the foregoing possible implementations of the second aspect, in a fourth possible implementation,
the sending module is further configured to: before the sending module sends, to the first terminal device, the data stream that is of the first terminal device and that is received by the receiving module, send a second auxiliary notification message to the network device, where
the second auxiliary notification message is used to notify the network device that the second terminal device can receive the data stream that is of the first terminal device and that is sent by the network device by using the MU-MIMO technology, and can send the data stream of the first terminal device to the first terminal device.

With reference to any one of the second aspect or the foregoing possible implementations of the second aspect, in a fifth possible implementation,
the second terminal device has a data transmission requirement or does not have a data transmission requirement.

In this possible implementation, if the second terminal device has a data transmission requirement, the second terminal device may receive a downlink data stream of the first terminal device in addition to receiving a downlink data stream of the second terminal device. In this way, a data transmission capability of the second terminal device can be fully utilized, thereby increasing an overall throughput of a communications system.

In this possible implementation, if the second terminal device does not have a data transmission requirement, based on a processing manner of a current LTE system, when only the first terminal device has a data transmission requirement, MU-MIMO cannot be implemented actually and can only be downgraded to SU-MIMO. However, in this possible implementation, even when the second terminal device does not have a data transmission requirement, the second terminal device may also be used to transmit a downlink data stream of the first terminal device. In this way, a plurality of terminal devices have a data transmission requirement and MU-MIMO can be implemented, a data transmission capability of the second terminal device is utilized, and an overall throughput of a communications system is increased.

According to a third aspect, this application provides a network device, including:
a processing module, configured to determine a second terminal device, where the second terminal device is configured to receive, from the network device, a data stream that is of the first terminal device and that is sent by the network device by using an MU-MIMO technology; and
a transceiver module, configured to send the data stream of the first terminal device to the second terminal device by using the MU-MIMO technology.

In this implementation, the second terminal device participates in MU-MIMO downlink data transmission of the first terminal device. Even if only the data stream of the first terminal device is transmitted or only a relatively small amount of data of the second terminal device is transmitted, a channel between the second terminal device and the network device is not wasted, and instead, is used to help transmit the data stream of the first terminal device. This avoids occurrence of a problem that MU-MIMO is downgraded to SU-MIMO because the network device cannot deliver data streams to a plurality of UEs by using the MU-MIMO technology, thereby increasing a throughput of a communications system.

In addition, this also avoids that, in a scenario in which a plurality of UEs simultaneously have a data transmission requirement but some UEs have a relatively low data transmission requirement, transmission capabilities of the UEs that have a relatively low data transmission requirement are not fully utilized, thereby also increasing the throughput of the communications system.

With reference to the third aspect, in a first possible implementation,
the transceiver module is further configured to: before the processing module determines the second terminal device, send a first control message to the first terminal device, where the first control message instructs the first terminal device to determine the second terminal device; and receive, from the first terminal device, a first auxiliary notification message that is sent by the first terminal device in response to the first control message, where the first auxiliary notification message is used to notify the network device that the second terminal device receives data of the first terminal device from the network device; and
the processing module is specifically configured to determine the second terminal device based on the notification message received by the transceiver module.

With reference to the third aspect, in a second possible implementation,
the transceiver module is further configured to: before the processing module determines the second terminal device, receive a second auxiliary notification message sent by the second terminal device, where the second auxiliary notification message is used to notify the network device that the second terminal device can receive the data stream that is of the first terminal device and that is sent by the network device by using the MU-MIMO technology, and can send the data stream of the first terminal device to the first terminal device; and
the processing module is specifically configured to determine the second terminal device based on the second auxiliary notification message.

With reference to any one of the third aspect or the foregoing possible implementations of the third aspect, in a third possible implementation, the transceiver module is further configured to: before sending the data stream of the first terminal device to the second terminal device by using the MU-MIMO technology,
send a second control message to the first terminal device, where the second control message is used to instruct the first terminal device to obtain downlink channel information of the second terminal device; and
receive the downlink channel information that is of the second terminal device and that is sent by the first terminal device in response to the second control message, where the downlink channel information of the second terminal device is used by the network device to send the data stream of the first terminal device to the second terminal device by using the MU-MIMO technology.

In this possible implementation, the first terminal device sends the downlink channel information of the second terminal device, so that when the second terminal device cannot send the downlink channel information to the network device, the network device can still learn of the downlink channel information of the second terminal device, and therefore, can send the data stream of the first terminal device to the second terminal device based on the obtained downlink channel information of the second terminal device by using the MU-MIMO technology.

With reference to the third aspect or the first or the second possible implementation of the third aspect, in a fourth possible implementation, the transceiver module is further configured to:
before sending the data stream of the first terminal device to the second terminal device by using the MU-MIMO technology, receive downlink channel information of the second terminal device sent by the second terminal device, where
the downlink channel information of the second terminal device is used by the network device to send the data stream of the first terminal device to the second terminal device by using the MU-MIMO technology.

With reference to any one of the third aspect or the foregoing possible implementations of the third aspect, in a fifth possible implementation, the transceiver module is further configured to:
before sending the data stream of the first terminal device to the second terminal device by using the MU-MIMO technology, receive downlink channel information of the first terminal device sent by the first terminal device, where
the downlink channel information of the first terminal device is used by the network device to send the data stream of the first terminal device to the second terminal device by using the MU-MIMO technology.

In this possible implementation, the network device may send the data stream of the first terminal device to the second terminal device based on the obtained downlink channel information of the first terminal device by using the MU-MIMO technology.

With reference to any one of the third aspect or the foregoing possible implementations of the third aspect, in a sixth possible implementation, the second terminal device has a data transmission requirement, or the second terminal device does not have a data transmission requirement.

In this possible implementation, if the second terminal device has a data transmission requirement, the second terminal device may receive a downlink data stream of the first terminal device in addition to receiving a downlink data stream of the second terminal device. In this way, a data transmission capability of the second terminal device can be fully utilized, thereby increasing an overall throughput of a communications system.

In this possible implementation, if the second terminal device does not have a data transmission requirement, based on a processing manner of a current LTE system, when only the first terminal device has a data transmission requirement, MU-MIMO cannot be implemented actually and can only be downgraded to SU-MIMO. However, in this possible implementation, even when the second terminal device does not have a data transmission requirement, the second terminal device may also be used to transmit a downlink data stream of the first terminal device. In this way, a plurality of terminal devices have a data transmission requirement and MU-MIMO can be implemented, a data transmission capability of the second terminal device is utilized, and an overall throughput of a communications system is increased.

In the first aspect to the third aspect and each possible implementation of the first aspect to the third aspect, the first terminal device, the second terminal device, and the network device are separately provided. Functions of functional modules of the first terminal device, the second terminal device, and the network device may be used as steps of the data transmission method that are respectively performed by the first terminal device, the second terminal device, and the network device. Details are not described herein.

### BRIEF DESCRIPTION OF DRAWINGS

FIG. 1 is a schematic diagram of downlink data transmission performed by a base station by using an SU-MIMO technology;
FIG. 2 is a schematic diagram of downlink data transmission performed by a base station by using an MU-MIMO technology;
FIG. 3 is a network architecture diagram of a wireless network provided in this application;
FIG. 4A to FIG. 4D are schematic diagrams of terminal device groups in this application;
FIG. 5A and FIG. 5B are flowcharts of a network device delivering a data stream and a terminal device forwarding the data stream in this application;
FIG. 6 is a schematic diagram of a simplified scenario that may be applied to this application;
FIG. 7 is a schematic structural diagram of a first terminal device provided in this application;
FIG. 8 is a schematic structural diagram of a first terminal device that uses a specific implementation and that is provided in this application;
FIG. 9 is a schematic structural diagram of a second terminal device provided in this application;
FIG. 10 is a schematic structural diagram of a second terminal device that uses a specific implementation and that is provided in this application;
FIG. 11 is a schematic structural diagram of a network device provided in this application; and
FIG. 12 is a schematic structural diagram of a network device that uses a specific implementation and that is provided in this application.

### DESCRIPTION OF EMBODIMENTS

To make the objectives, solutions, and advantages of this application more understandable, the following provides detailed descriptions. The detailed descriptions provide various implementations of an apparatus and/or a method by using accompanying drawings such as block diagrams and flowcharts, and/or examples. These block diagrams, flowcharts, and/or examples include one or more functions and/or operations. Persons skilled in the art may understand that each function and/or operation in the block diagrams, the flowcharts, and/or the examples can be performed independently or jointly by using various hardware, software, and firmware, or any combination thereof.

In this application, the terms "system" and "network" are often used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes this application in detail with reference to the accompanying drawings.

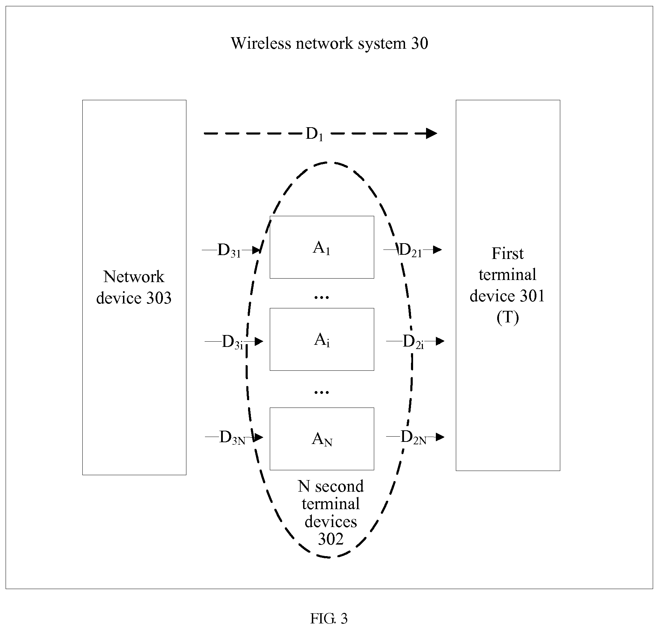

FIG. 3 shows a schematic network architecture diagram of a wireless network system that is applicable to this application. As shown in FIG. 3, the wireless network system 30 includes a network device 303, a first terminal device 301 (identified as T in the figure), and N second terminal devices 302 (identified as A₁, ..., Aᵢ, ..., and A_{N} in the figure), where N is a positive integer.

For brevity, in the following implementations, a variable i is used to replace any integer from 1 to N. Therefore, various cases of the variable i in the following description are applicable to a case in which i is any integer from 1 to N.

For simplicity, only one network device 303 is shown in FIG. 3, but actually there may be one or more network devices 303 in the wireless network system 30; and only one first terminal device 301 is shown in FIG. 3, but actually there may be one or more first terminal devices 301 in the wireless network system 30.

In the wireless network system 30 shown in FIG. 3, the second terminal devices 302 may directly communicate with the first terminal device 301 bidirectionally, and do not require forwarding performed by the network device 303. Optionally, the second terminal devices 302 may perform communication based on the device-to-device (Device-to-Device, D2D) protocol of the 3rd Generation Partnership Project (3rd Generation Partnership Project, 3GPP), or may perform communication based on the Wireless Fidelity (Wireless Fidelity, Wi-Fi) protocol of the Institute of Electrical and Electronics Engineers (Institute of Electrical and Electronics Engineers, IEEE). Communication between the second terminal device 302 and the first terminal device 301 may belong to near field communication, and therefore may have better communication quality than long-distance communication between the network device 303 and the second terminal device 302. Specifically, data transmission between the second terminal device 302 and the first terminal device 301 has a higher data transmission rate and/or lower transmit power than data transmission between the network device and the second terminal device 302 and data transmission between the network device and the first terminal device 301.

In the wireless network system 30 shown in FIG. 3, a communications standard used for wireless communication between the first terminal device 301 and the network device 303 and wireless communication between the second terminal device 302 and the network device 303 includes but is not limited to:
a Global System for Mobile Communications (Global System for Mobile communications, GSM), Code Division Multiple Access (Code Division Multiple Access, CDMA), IS-95, Code Division Multiple Access (Code Division Multiple Access, CDMA) 2000, Time Division-Synchronous Code Division Multiple Access (Time Division-Synchronous Code Division Multiple Access, TD-SCDMA), Wideband Code Division Multiple Access (Wideband Code Division Multiple Access, WCDMA), time division duplex-Long Term Evolution (Time Division Duplex-Long Term Evolution, TDD LTE), frequency division duplex-Long Term Evolution (Frequency Division Duplex-Long Term Evolution, FDD LTE), Long Term Evolution Advanced (Long Term Evolution Advanced, LTE-Advanced), a personal handyphone system (Personal Handyphone System, PHS), Wireless Fidelity (Wireless Fidelity, Wi-Fi) stipulated by 802.11 series protocols, Worldwide Interoperability for Microwave Access (Worldwide Interoperability for Microwave Access, WiMAX), and various wireless communications standards evolved in the future.

The first terminal device 301 and the second terminal device 302 may be wireless terminals, wireless local area network access points, or relay (relay) nodes. The wireless terminal may be a device that provides voice and/or data connectivity for a user, a handheld device with a wireless connection function, or another processing device connected to a wireless modem. The wireless terminal may communicate bidirectionally with one or more core networks by using a radio access network (RAN, Radio Access Network). The wireless terminal may be a mobile terminal, such as a mobile phone (also referred to as a "cellular" phone), or a computer with a mobile terminal, for example, may be a portable, pocket-sized, handheld, computer built-in, or in-vehicle mobile apparatus, which exchanges voice and/or data with the radio access network. For example, the wireless terminal may be a device such as a personal communications service (PCS, Personal Communications Service) phone, a cordless phone, a Session Initiation Protocol (SIP) phone, a wireless local loop (WLL, Wireless Local Loop) station, or a personal digital assistant (PDA, Personal Digital Assistant). The wireless terminal may also be referred to as a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), a user device (User Device), or user equipment (User Equipment).

The network device 303 may include a base station, or a radio resource management device configured to control a base station, or include a base station and a radio resource management device that is configured to control the base station. The base station may be a macro base station. The base station may be alternatively a micro base station, for example, a small cell (small cell) access point, or a micro cell (pico cell) access point. The base station may be alternatively a home base station, for example, a home NodeB (Home NodeB, HNB) or a home eNodeB (Home eNodeB, HeNB). The network device 303 may also be a relay (relay) node.

For example, for an LTE system such as TDD LTE, FDD LTE, or LTE-A, the network device 303 in the wireless network system 30 provided in the embodiments of the present invention may be an evolved NodeB (evolved NodeB, eNodeB), and the first terminal device 301 and the second terminal device 302 may be UEs. For a TD-SCDMA system or a WCDMA system, the network device 303 in the wireless network system 30 provided in the embodiments of the present invention may include a NodeB (NodeB) and/or a radio network controller (Radio Network Controller, RNC), and the first terminal device 301 and the second terminal device 302 may be UEs. For a GSM system, the network device 303 in the wireless network system 30 provided in the embodiments of the present invention may include a base transceiver station (Base Transceiver Station, BTS) and/or a base station controller (Base Station Controller, BSC), and the first terminal device 301 and the second terminal device 302 may be mobile stations (Mobile Station, MS). For a Wi-Fi system, the network device 303 may include an access point (Access Point, AP) and/or an access controller (Access Controller, AC), and the first terminal device 301 and the second terminal device 302 may be stations (station, STA).

In a network architecture shown in FIG. 3, the first terminal device 301 receives a first data stream D₁ sent by the network device 303 and N second data streams D₂₁, ..., D₂ᵢ, ..., and D_{2N} sent by the N second terminal devices 302. The N second data streams are generated by the N second terminal devices based on N third data streams D₃₁, ..., D₃ᵢ, ..., and D_{3N} that are sent in parallel by the network device 303 by using an MU-MIMO technology. The N third data streams D₃₁, ..., D₃ᵢ, ..., and D_{3N} and the N second data streams D₂₁, ..., D₂ᵢ, ..., and D_{2N} may be the same or may be different. As shown in FIG. 3, the second terminal device Aᵢ receives the third data stream D₃ᵢ from the network device 303, generates D₂ᵢ based on D₃ᵢ, and sends D₂ᵢ to the first terminal device T.

It should be noted that because a communications protocol used between the network device 303 and the second terminal device 302 may be different from a communications protocol used between the second terminal device 302 and the first terminal device 301, the N second data streams D₂₁, ..., D₂ᵢ, ..., and D_{2N} and the N third data streams D₃₁, ..., D₃ᵢ, ..., and D_{3N} may be expressed in different data streams. However, regardless of a form of expression, both the N second data streams D₂₁, ..., D₂ᵢ, ..., and D_{2N} and the N third data streams D₃₁, ..., D₃ᵢ, ..., and D_{3N} include information destined for the first terminal device 301, and are data streams destined for the first terminal device 301.

For a purpose of saving identifiers planned for terminal devices, the terminal devices may be managed by group. For example, the first terminal device 301 and the second terminal device 302 may be managed according to a D2D protocol specification stipulated by the 3GPP. For details, refer to the D2D protocol specification.

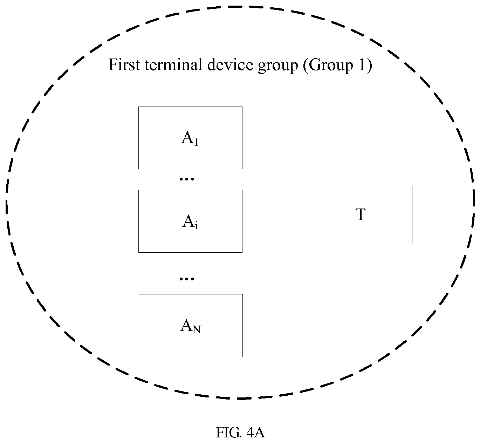

Optionally, the first terminal device 301 (T) and the N second terminal devices 302 (A₁, ..., Aᵢ, ..., and A_{N}) belong to a first terminal device group Group 1, as shown in FIG. 4A. In Group 1, all terminal devices except the first terminal device 301 meet an auxiliary condition. Therefore, the N second terminal devices 302 meet the auxiliary condition.

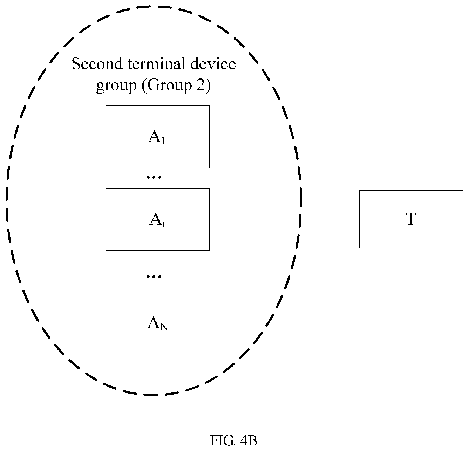

Optionally, the N second terminal devices 302 (A₁, ..., Aᵢ, ..., and A_{N}) belong to a second terminal device group Group 2, and the first terminal device 301 (T) does not belong to Group 2, as shown in FIG. 4B. All terminal devices in Group 2 meet an auxiliary condition.

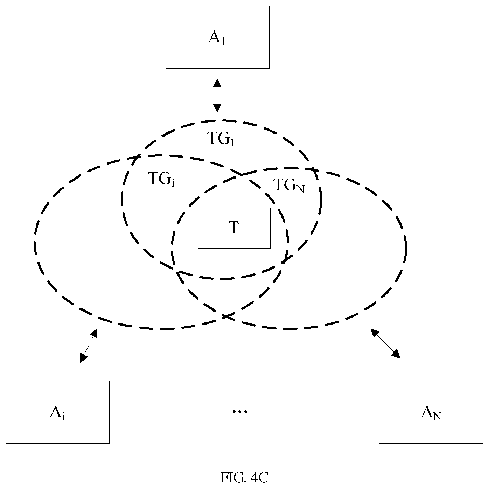

Optionally, the first terminal device 301 belongs to N different third terminal device groups (TG₁, ..., TGᵢ, ..., and TG_{N}), and the third terminal device group TGᵢ is corresponding to the second terminal device 302Aᵢ, as shown in FIG. 4C. Terminal devices in the third terminal device group TGᵢ meet a target condition.

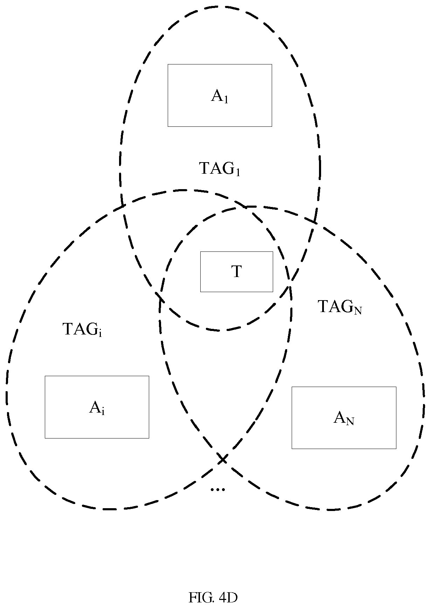

Optionally, the first terminal device 301 belongs to N fourth terminal device groups (TAG₁, ..., TAGᵢ, ..., and TAG_{N}), and the fourth terminal device group TAGᵢ includes the second terminal device 302Aᵢ, as shown in FIG. 4D. In the fourth terminal device group TAGᵢ, other terminal devices except the second terminal device 302Aᵢ meet a target condition. Therefore, the first terminal device 301 meets the target condition.

The auxiliary condition may include one or more of the following conditions:
a data transmission rate between a terminal device and the first terminal device 301 is greater than a first data transmission rate threshold;
a distance between the terminal device and the first terminal device 301 is less than a first distance threshold; and
a remaining electricity quantity of the terminal device is greater than an electricity quantity threshold.

The target condition may include one or more of the following conditions:
a data transmission rate between a terminal device and the second terminal device 302Aᵢ is greater than a second data transmission rate threshold; and
a distance between the terminal device and the second terminal device 302Aᵢ is less than a second distance threshold.

The auxiliary condition and the target condition can ensure that the second terminal device 302 can reliably and efficiently forward a data stream for the first terminal device 301.

Each of the N second terminal devices A₁, ..., Aᵢ, ..., and A_{N} has a data transmission requirement; some of the N second terminal devices A₁, ..., Aᵢ, ..., and A_{N} have a data transmission requirement; or none of the N second terminal devices A₁, ..., Aᵢ, ..., and A_{N} has a data transmission requirement.

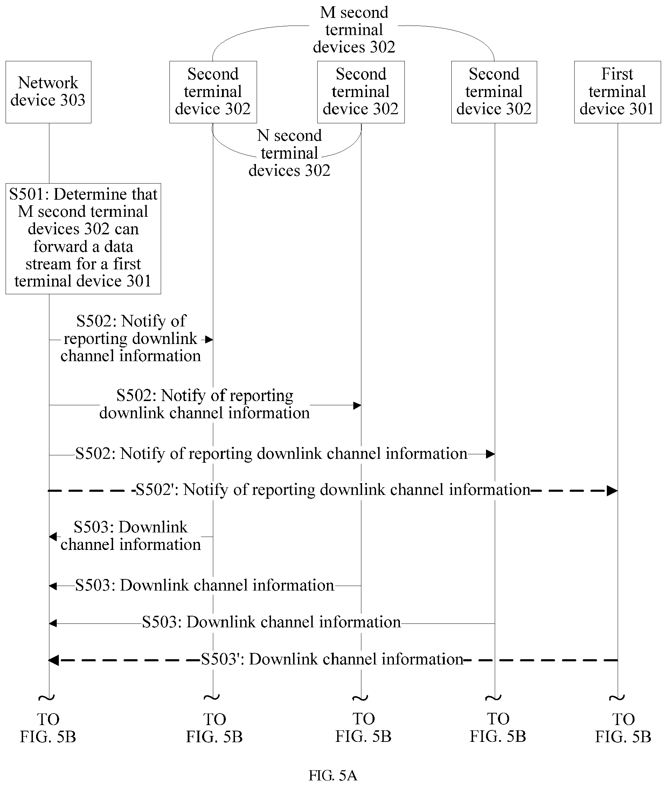

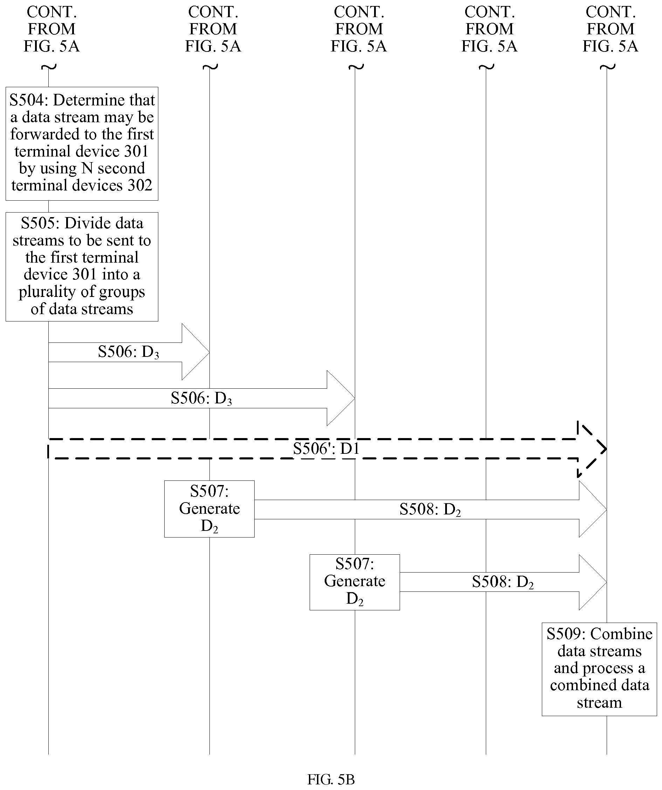

FIG. 5A and FIG. 5B are schematic flowcharts of delivering, by a network device 303 by using an MU-MIMO technology, a data stream to N second terminal devices 302 and forwarding, by the N second terminal devices 302, the data stream to a first terminal device 301 in this application.

As shown in FIG. 5A and FIG. 5B, this process may include the following steps.

S501: A network device 303 determines that M second terminal devices 302 can forward a data stream for a first terminal device 301.

M≥N, and the M second terminal devices 302 include the foregoing N second terminal devices 302 (A₁, ..., Aᵢ, ..., and A_{N}). It should be noted that the M second terminal devices 302 are terminal devices that are around the first terminal device 301 and that can forward a data stream from the network device 303 for the first terminal device 301, and the N second terminal devices 302 in the M second terminal devices are terminal devices that forward a data stream from the network device 303 for the first terminal device 301 when downlink data transmission is performed. In the process shown in FIG. 5A and FIG. 5B, an example in which M=3 and N=2 is used for description.

The network device 303 may determine, in a plurality of optional implementations, that the M second terminal devices 302 can send the data stream of the first terminal device 301 for the first terminal device 301. The following optional implementation 1 and optional implementation 2 are used as examples for description herein.

### [Optional implementation 1]

In this optional implementation 1, the first terminal device 301 notifies the network device 303 that the M second terminal devices 302 can forward the data stream for the first terminal device 301.

The network device 303 may send a first control message to the first terminal device 301. The message instructs the first terminal device 301 to determine a second terminal device 302 that forwards the data stream. The network device 303 may carry identification information of the first terminal device 301 in the first control message. After receiving the first control message, the first terminal device 301 triggers, based on the identification information of the first terminal device 301 carried in the message, determining of the second terminal device 302 that can forward the data stream for the first terminal device 301. The first terminal device 301 responds to the first control message, and sends a first auxiliary notification message to the network device 303. The first auxiliary notification message is used to indicate that the M second terminal devices 302 determined by the first terminal device can forward the data stream of the first terminal device for the first terminal device 301. After receiving the first auxiliary notification message, the network device 303 determines that the M second terminal devices 302 can forward the data stream for the first terminal device 301.

Alternatively, the first terminal device 301 may actively send a first auxiliary notification message (for example, periodically send the first auxiliary notification message) to the network device 303, to indicate that the M second terminal devices 302 determined by the first terminal device can forward the data stream for the first terminal device 301, without having to send the first auxiliary notification message only after receiving a first control message sent by the network device 303.

The first terminal device 301 may use the following plurality of solutions to determine that the M second terminal devices 302 forward the data stream of the first terminal device for the first terminal device 301. Before the first terminal device 301 determines that the M second terminal devices 302 forward the data stream of the first terminal device from the network device 303 for the first terminal device 301, the network device 303 may send the first control message to the first terminal device. The first control message instructs the first terminal device to determine the M second terminal devices 302. If the first terminal device does not receive the first control message, the first terminal device may not determine the M second terminal devices 302.

### Optional solution 1:

The first terminal device 301 broadcasts an auxiliary request message to at least one surrounding terminal device. The auxiliary request message is used to query the at least one terminal device whether the at least one terminal device can receive the data stream of the first terminal device from the network device 303 for the first terminal device 301 and forward the data stream of the first terminal device to the first terminal device.

The first terminal device 301 receives, from the at least one terminal device, auxiliary response messages sent by the M second terminal devices 302 in response to the auxiliary request message. The auxiliary response message is used to notify the first terminal device 301 that a terminal device sending the auxiliary response message can forward the data stream for the first terminal device 301. Then, the first terminal device 301 determines that the M second terminal devices 302 can forward the data stream for the first terminal device.

### Optional solution 2:

The first terminal device 301 receives first auxiliary indication messages sent by the M second terminal devices 302. The first auxiliary indication message is used to indicate that a terminal device sending the first auxiliary indication message can forward the data stream for the first terminal device 301. The first terminal device 301 determines, based on the received first auxiliary indication messages sent by the M second terminal devices 302, that the M second terminal devices 302 can forward the data stream for the first terminal device 301.

Optionally, after receiving auxiliary acknowledgement messages sent by the first terminal device 301 in response to the first auxiliary indication messages, the second terminal devices 302 may determine that the second terminal devices 302 can forward the data stream for the first terminal device 301.

### Optional solution 3:

The first terminal device 301 receives second auxiliary indication messages sent by a plurality of second terminal devices 302 (the plurality of second terminal devices 302 include the M second terminal devices 302). The second auxiliary indication message is used to indicate that a terminal device sending the second auxiliary indication message expects to forward the data stream for the first terminal device 301.

After the first terminal device 301 receives the second auxiliary indication messages sent by the plurality of second terminal devices 302 and when the second terminal devices 302 meet the foregoing "auxiliary condition", the first terminal device 301 determines that the second terminal devices 302 can forward the data stream for the first terminal device 301.

Optionally, after receiving auxiliary acknowledgement messages sent by the first terminal device 301 in response to the second auxiliary indication messages, the second terminal devices 302 may determine that the second terminal devices 302 can forward the data stream for the first terminal device 301.

Optionally, the first auxiliary notification message includes at least one of the following information:

### Information 1: identification information of each terminal device in the M second terminal devices 302.

The network device 303 may determine, based on information 1 and the first terminal device 301 that sends the first auxiliary notification message, that the M second terminal devices 302 can forward the data stream for the first terminal device 301.

### Information 2: the identification information of the first terminal device 301.

The network device 303 may learn in advance that the first terminal device 301 and the M second terminal devices 302 belong to a first terminal device group Group 1. The network device 303 may determine, based on the identification information of the first terminal device 301, that other terminal devices in Group 1, namely, the M second terminal devices 302, can forward the data stream for the first terminal device 301.

Alternatively, the network device 303 learns in advance that the first terminal device 301 belongs to M third terminal device groups TG₁, ..., TGᵢ, ..., and TG_{M}, and the third terminal device group TGᵢ is corresponding to the second terminal device 302Aᵢ. The network device 303 may determine, based on the identification information of the first terminal device 301, the M third terminal device groups TG₁, ..., TGᵢ, ..., and TG_{M}, and that second terminal devices 302 respectively corresponding to the M third terminal device groups TG₁, ..., TGᵢ, ..., and TG_{M} can forward the data stream for the first terminal device 301.

### Information 3

Identification information of the first terminal device group Group 1 to which the M second terminal devices 302 and the first terminal device 301 belong.

The network device 303 may learn in advance that Group 1 includes the first terminal device 301 and the M second terminal devices 302.

### Information 4

Identification information of a second terminal device group Group 2 to which the M second terminal devices 302 belong.

The network device 303 may learn in advance that Group 2 includes the M second terminal devices 302, and determine, based on the identification information of Group 2, that the M second terminal devices 302 in Group 2 may forward the data stream for the first terminal device 301 that sends the first auxiliary notification message.

### [Optional implementation 2]

In optional implementation 2, the M second terminal devices 302 separately notify the network device 303 that the M second terminal devices 302 can forward the data stream for the first terminal device 301.

Optionally, the network device 303 may send a second auxiliary information request message to a plurality of second terminal devices 302 (including the M second terminal devices 302). The M second terminal devices 302 separately send a second auxiliary notification message in response to the second auxiliary information request message. The second auxiliary notification messages are used to indicate that the M second terminal devices 302 can forward the data stream for the first terminal device 301. After receiving the second auxiliary notification messages, the network device 303 determines that the M second terminal devices 302 can forward the data stream for the first terminal device 301. Optionally, when the second terminal devices 302 send the second auxiliary notification messages, information about a terminal device for which the second terminal devices 302 can forward a data stream may be indicated. The information includes information of the first terminal device 301. When the received second auxiliary notification messages include the information of the first terminal device 301, the network device 303 determines that the second terminal devices 302 can forward the data stream for the first terminal device 301.

Alternatively, the M second terminal devices 302 may actively send second auxiliary notification messages (for example, periodically send the second auxiliary notification messages), without having to send the second auxiliary notification messages only after receiving a second auxiliary information request message sent by the network device 303.

The second auxiliary notification message may include at least one of the following information:

### Information 1

Identification information of a second terminal device 302 that sends a second auxiliary notification message. The network device 303 may determine, based on the identification information of the second terminal device 302, that the second terminal device 302 can forward the data stream for the first terminal device 301.

### Information 2

Identification information of the first terminal device 301. The network device 303 may determine, based on the identification information of the first terminal device 301 and based on a second terminal device 302 that sends a second auxiliary notification message, that the second terminal device 302 can forward the data stream for the first terminal device 301.

### Information 3

Identification information of a third terminal device group TG corresponding to a second terminal device 302 that sends a second auxiliary notification message.

The network device 303 learns of a correspondence between the third terminal device group and the second terminal device 302 in advance, and determines that the second terminal device 302 corresponding to the TG can forward the data stream for the first terminal device 301.

### Information 4

Identification information of a fourth terminal device group TAG to which a second terminal device 302 that sends a second auxiliary notification message belongs.

The network device 303 learns of a correspondence between the TAG and the second terminal device 302 in advance, and determines that the second terminal device 302 included in the TAG can forward the data stream for the first terminal device 301.

S502: The network device 303 instructs the M second terminal devices 302 to report downlink channel information.

For example, the network device 303 may send a channel information reporting request message to the M second terminal devices 302, to request reporting of the downlink channel information.

S502'. The network device 303 instructs the first terminal device 301 to report downlink channel information.

For example, the network device 303 may send a channel information reporting request message to the first terminal device 301, to request reporting of the downlink channel information.

S503: After receiving a notification from the network device 303 or the first terminal device 301, for example, after receiving a channel information reporting request message, each of the M second terminal devices 302 reports downlink channel information of a downlink channel between the second terminal device 302 and the network device 303 to the network device 303.

Herein, the channel information reporting request message may be used to request the second terminal devices 302 or the first terminal device 301 to report information of downlink channels between the second terminal devices 302 and the network device 303, or information of a downlink channel between the first terminal device 301 and the network device 303; or
the channel information reporting request message may be used to request terminal devices in the first terminal device group Group 1 to which the first terminal device 301 and the M second terminal devices 302 belong, to report downlink channel information, where the message may carry the identification information of Group 1, and after receiving the message, the second terminal devices 302 report the downlink channel information because the second terminal devices 302 learn in advance that the second terminal devices 302 belong to Group 1; or
the channel information reporting request message may be used to request terminal devices in the second terminal device group Group 2 to which the M second terminal devices 302 belong, to report downlink channel information, where the message may carry the identification information of Group 2, and after receiving the message, the second terminal devices 302 report the downlink channel information because the second terminal devices 302 learn in advance that the second terminal devices 302 belong to Group 2.

The network device 303 may alternatively send M channel information reporting request messages. The M messages respectively carry identification information of M fourth terminal device groups TAG₁, ..., TAGᵢ, ..., and TAG_{M}. After a second terminal device 302 receives a channel information reporting request message, if the message carries identification information of a fourth terminal device group to which the second terminal device 302 belongs, the second terminal device 302 reports downlink channel information.

Certainly, the second terminal devices 302 may alternatively report downlink channel information (for example, periodically send the downlink channel information) actively, without having to report the downlink channel information only after receiving a notification of the network device 303. For example, when determining that the second terminal devices 302 meet the "auxiliary condition", the second terminal devices 302 report the downlink channel information to the network device 303.

Alternatively, after receiving a notification of the first terminal device 301, for example, after receiving the channel information reporting request message sent by the first terminal device 301, the second terminal devices 302 report the downlink channel information to the network device 303.

Alternatively, when detecting that the first terminal device 301 reports the downlink channel information to the network device 303, the second terminal devices 302 report the downlink channel information to the network device 303.

S503': The first terminal device 301 reports downlink channel information of a downlink channel between the first terminal device 301 and the network device 303 to the network device 303.

Certainly, the first terminal device 301 may alternatively report downlink channel information (for example, periodically send the downlink channel information) actively, without having to report the downlink channel information only after receiving a notification of the network device 303.

In step S502, step S502', step S503, and step S503', the downlink channel information may be a precoding matrix indicator (precoding matrix indicator, PMI) and a channel quality indicator (channel quality indicator, CQI). The first terminal device 301 or the second terminal devices 302 may select a PMI and a CQI that are corresponding to a highest data transmission rate, and report the PMI and the CQI to the network device. The downlink channel information may also be information used for reflecting a channel transmission characteristic, for example, a channel transmission matrix (also often referred to as a system function or a system impulse response). The channel transmission matrix is processed, for example, singular value decomposition (singular value decomposition, SVD) is performed for an eigenvalue and an eigenvector of the matrix, to determine a precoding matrix.

The following uses an example in which the network device 303 is a base station and terminal devices are UEs in a current LTE system to describe the precoding matrix and precoding processing. When the base station simultaneously delivers data streams to a plurality of UEs, one or more data streams sent to each UE need to be processed by using the precoding matrix. The base station transmits the processed data streams to the UEs by using antennas. Before performing downlink data transmission, the base station performs precoding on a downlink data stream based on the precoding matrix, and sends the downlink data stream to the terminal devices. This avoids interference from another channel, and enables the precoded downlink data streams to obtain best transmission quality on a downlink channel.

A manner in which the precoding matrix is obtained may be based on codebook space, or may be based on non-codebook space.

In the codebook space-based manner, codebook space contains a plurality of precoding matrices. Each precoding matrix is identified by a PMI. The codebook space may be stored in a base station and UE in advance. The UE may measure a downlink channel, determine a PMI, and send the PMI to the base station, so that the base station determines a precoding matrix corresponding to the PMI.

In the non-codebook space-based manner, UE measures a downlink channel, and may feed a downlink channel measurement result back to a base station. The base station determines a channel transmission matrix based on the downlink channel measurement result, and performs processing (for example, SVD decomposition) on the channel transmission matrix to determine a precoding matrix.

In step S502, step S502', step S503, and step S503', the network device 303 may alternatively instruct at least one terminal device, in M+1 terminal devices that include the first terminal device 301 and the M second terminal devices 302, to report downlink channel information. The at least one terminal device reports the downlink channel information of the at least one terminal device after receiving a notification.

Alternatively, at least one terminal device in M+1 terminal devices that include the first terminal device 301 and the M second terminal devices 302 may actively report downlink channel information, for example, periodically report the downlink channel information.

S504: The network device 303 determines, based on the received downlink channel information sent by the M second terminal devices 302, that the data stream may be forwarded to the first terminal device 301 by using the N second terminal devices 302 in the M second terminal devices 302.

Optionally, the network device 303 may select the N second terminal devices 302 from the M second terminal devices 302 by performing MU-MIMO preprocessing. The N second terminal devices 302 meet:
channels corresponding to a precoding matrix that is corresponding to a PMI are orthogonal or quasi-orthogonal to each other.

If some terminal devices do not report downlink channel information, the network device 303 may use downlink channel information preset for these terminal devices, perform MU-MIMO preprocessing based on the downlink channel information of these terminal devices together with the downlink channel information reported by the terminal devices that already report the downlink channel information, and select, from a plurality of terminal devices, terminal devices to which downlink data streams may be sent in parallel by using an MU-MIMO technology.

S505: The network device 303 divides data streams that need to be sent to the first terminal device 301 into at least one group of data streams, where the at least one group of data streams includes N third data streams D₃₁, ..., D₃ᵢ, ..., and D_{3N}.

S506: The network device 303 sends the N third data streams D₃₁, ..., D₃ᵢ, ..., and D_{3N} to the N second terminal devices 302 in parallel by using an MU-MIMO technology.

Optionally, the network device 303 may further send terminal device indication information used to indicate that the N third data streams D₃₁, ..., D₃ᵢ, ..., and D_{3N} are destined for the first terminal device 301.

Optionally, the network device 303 may carry the foregoing target terminal device indication information in the sent third data streams. After receiving the third data streams, the second terminal devices 302 determine, based on the target terminal device indication information carried in the third data streams, that the received third data streams are destined for the first terminal device 301. Then, the second terminal devices 302 may process the third data streams to generate corresponding second data streams, and send the second data streams to the first terminal device 301.

Alternatively, optionally, the network device 303 may send the foregoing target terminal device indication information before sending the third data streams, to indicate that the to-be-sent third data streams are destined for the first terminal device 301. Then, the second terminal devices 302 may process the third data streams to generate corresponding second data streams, and send the second data streams to the first terminal device 301.

Alternatively, optionally, the network device 303 may send the foregoing target terminal device indication information after sending the third data streams, to indicate that the sent third data streams are destined for the first terminal device 301. Then, the second terminal devices 302 may process the third data streams to generate corresponding second data streams, and send the second data streams to the first terminal device 301.

S506': The network device 303 sends a first data stream D₁ to the first terminal device 301 by using an MU-MIMO technology.

Optionally, the first data stream D₁ and the N third data streams D₃₁, ..., D₃ᵢ, ..., and D_{3N} are sent in parallel by the network device 303 by using the MU-MIMO technology.

In the previously described steps, the network device 303 sends, based on downlink channel information reported by each terminal device, data streams in parallel by using the MU-MIMO technology. Optionally, besides a previously described solution in which each terminal device reports downlink information, the following downlink channel information sending solution may also be used (each terminal device may be a terminal device with a data transmission requirement, or may be a terminal device without a data transmission requirement).

Optionally, before sending the information of the downlink channels between the second terminal devices 302 and the network device 303 to the network device 303, the first terminal device 301 receives a second control message sent by the network device 303. The second control message is used to instruct the first terminal device 301 to obtain the downlink channel information of the second terminal devices 302.

Each terminal device sends information of a downlink channel between the terminal device and the network device 303 to a central terminal device. The central terminal device may be one of the foregoing each terminal device, or may be a terminal device except the foregoing each terminal device. The central terminal device may meet at least one of the following conditions:
a data transmission rate of data sent by each terminal device to the central terminal device is greater than a third data transmission rate threshold;
a remaining electricity quantity of the central terminal device is greater than a first electricity quantity threshold; and
a distance between each second terminal device of the foregoing each terminal device and the central terminal device is less than a third distance threshold.

Downlink channel information sent by each terminal device may include one or more of the following information:
First channel information: The first channel information is a channel transmission matrix. The channel transmission matrix is used to represent inherent transmission characteristics of a channel. These inherent transmission characteristics cause deformation on a signal transmitted in the channel, for example, amplifying a signal power or attenuating a signal power, to produce an effect such as a Doppler frequency shift, a signal phase deviation, or a multipath delay on the signal. The first channel information herein is a channel transmission matrix of a downlink channel between a second terminal device and a network device. When the network device sends downlink data to the second terminal device on the downlink channel, the foregoing various changes occur, due to inherent transmission characteristics of the channel, on the downlink data transmitted on the downlink channel.
Second channel information: The second channel information is a transformation matrix of a channel transmission matrix. The transformation matrix may be a matrix obtained after linear transformation is performed on the foregoing channel transmission matrix, or may be a matrix obtained after non-linear transformation is performed on the foregoing channel transmission matrix. The transformation matrix obtained after linear transformation is performed on the channel transmission matrix can reflect inherent transmission characteristics of a channel. For the transformation matrix obtained after non-linear transformation is performed on the channel transmission matrix, inherent transmission characteristics of a channel should not be changed during non-linear transformation. The transformation matrix of the channel transmission matrix may be a second-order characteristics matrix of the channel transmission matrix, for example, an autocorrelation matrix of the channel transmission matrix. Alternatively, the transformation matrix of the channel transmission matrix may be a high-order characteristics matrix of the channel transmission matrix.
Third channel information: The third channel information is a matrix obtained after quantization processing is performed on a channel transmission matrix, or a matrix obtained after quantization processing is performed on a transformation matrix of a channel transmission matrix. Because an element in the channel transmission matrix or in the transformation matrix of the channel transmission matrix may be an analog parameter, but current wireless communications systems are mainly digital communications systems, for easy processing, a manner in which Z quantized values are used to convert analog parameters into digital parameters is used. The manner is referred to as quantization processing. A value of Z herein is an integral power of 2.
Fourth channel information: The fourth channel information includes:
   for each codebook in at least one codebook that may be used by a terminal device that reports channel information of a downlink channel, a precoding matrix indicator PMI corresponding to the codebook, and a channel quality indicator CQI corresponding to a case in which the PMI corresponding to the codebook is used and the network device 303 simultaneously sends K data streams for the terminal device, where K is a positive integer and is not greater than a maximum quantity of data streams that the network device 303 can simultaneously send for the terminal device.

Each terminal device may use a characteristic that near field communication with the central terminal device has good communication quality, and send the information of the downlink channel to the central terminal device at a relatively high data transmission rate and/or relatively low transmit power. This not only avoids occupancy of a capacity of a channel between the terminal device and the network device 303 but also implements transmission of relatively rich channel information. This mechanism can feed back channel information to the network device 303 with relatively high precision, compared with a mechanism used by the current LTE system to feed back a downlink control channel.

The central terminal device performs MU-MIMO preprocessing based on the channel information sent by each terminal device. In a preprocessing process, the central terminal device determines, based on the channel information sent by each terminal device, terminal devices, in the foregoing each terminal device, to which the network device 303 can simultaneously deliver a data stream by using the MU-MIMO technology, and determines, when the network device 303 delivers the data streams in parallel by using the MU-MIMO technology, a PMI suitable for each terminal device that receives a parallel data stream, and a channel quality indicator CQI corresponding to a case in which the terminal device uses the suitable PMI and the network device 303 simultaneously sends K data streams for the second terminal device 302.

Optionally, during the preprocessing, the central terminal device may determine, when channels corresponding to PMIs used by each terminal device are orthogonal or quasi-orthogonal to each other, that these PMIs are PMIs used for downlink data transmission.

In the current LTE system, the MU-MIMO preprocessing is completely performed by a base station. Because downlink channel information obtained by the base station is limited, performance of MU-MIMO data transmission is affected. However, in the foregoing optional solution, the MU-MIMO preprocessing may alternatively be performed by the central terminal device. The network device 303 performs MU-MIMO downlink data transmission directly based on a received MU-MIMO preprocessing result. Because the central terminal device performs the MU-MIMO preprocessing based on channel information, the preprocessing result has relatively high precision. The network device 303 performs MU-MIMO transmission based on the MU-MIMO preprocessing result with relatively high precision, thereby effectively improving the performance of the MU-MIMO data transmission.

S507: For each second terminal device 302 in the N second terminal devices 302, the second terminal device 302 generates a second data stream after receiving a third data stream.

The second terminal device 302 may use the received third data stream as the second data stream, and directly forward the second data stream to the first terminal device 301; or
the second terminal device 302 may combine a plurality of received third data streams, generate the second data stream, and forward the second data stream to the first terminal device 301; or
the second terminal device 302 may split the received third data stream into a plurality of second data streams, and forward the second data streams to the first terminal device 301.

S508: For each second terminal device 302 in the N second terminal devices 302, the second terminal device 302 sends the generated second data stream to the first terminal device 301.

S509: The first terminal device 301 performs data processing on N received second data streams D₂₁, ..., D₂ᵢ, ..., and D_{2N}. Optionally, if the first terminal device 301 receives the first data stream D₁ sent by the network device 303 in step S506', the first terminal device 301 determines, based on D₂₁, ..., D₂ᵢ, ..., and D_{2N} and the first data stream D₁, PMIs used for downlink data transmission.

For example, before sending the data streams in parallel by using the MU-MIMO technology, the network device 303 performs segmentation processing on higher-layer data that needs to be sent to the first terminal device 301, and adds a segment identifier for each data segment, where segment identifiers may represent a sequence of the higher-layer data segments. Then, the network device 303 performs physical-layer protocol processing on the higher-layer data segments, and sends the processed higher-layer data segments to the first terminal device 301 by using antennas.

After receiving each data stream, the first terminal device 301 performs physical-layer protocol processing on the data stream, generates a plurality of higher-layer data segments and a segment identifier of each higher-layer data segment, and assembles the higher-layer data segments according to the sequence.

Herein, an LTE system is used as an example to describe segmentation processing on data. The higher-layer data may be data on a protocol layer higher than a physical layer, for example, a Media Access Control (Media Access Control, MAC) layer. The physical-layer protocol processing may include: scrambling, modulation, layer mapping, precoding, resource element (Resource Element, RE) mapping, orthogonal frequency division multiplexing (Orthogonal Frequency Division Multiplexing, OFDM) signal generation, signal transmission on an antenna port, and the like.

Certainly, in step S505, a solution used by the network device 303 to divide the data streams is also not limited to the foregoing solution, and a manner in which the first terminal device 301 processes the plurality of received data streams is also not limited to the foregoing processing manner. The solution and the manner herein are used only as examples for description. In the foregoing process, the network device 303 sends, by using the MU-MIMO technology and a plurality of terminal devices, downlink data to be sent to one terminal device, fully utilizing a downlink transmission capability of each terminal device covered by the network device 303, and effectively increasing a throughput of a communications system.

Step S503' and step S506' are optional steps, indicating that even if the network device 303 does not deliver a data stream to the first terminal device 301, the network device 303 can also send, by using the MU-MIMO technology and another terminal device, namely, the second terminal device 302, downlink data that needs to be sent to the first terminal device 301.

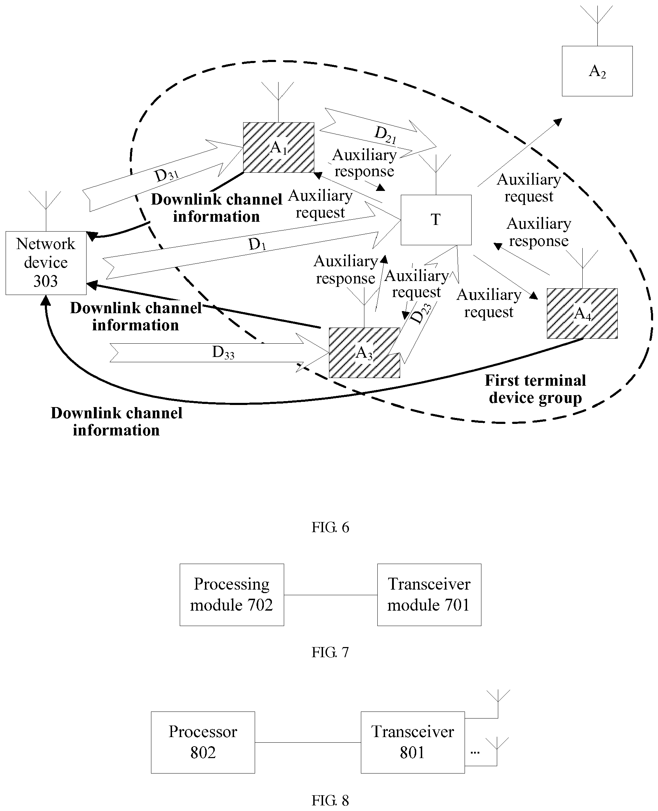

The following uses a simplified scenario shown in FIG. 6 as an example. A first terminal device 301 (T) and second terminal devices 302 (A₁, A₃, and A₄) form a first terminal device group. A network device 303 finally sends data streams to A₁, A₃, and T in parallel by using an MU-MIMO technology.

First, T sends an auxiliary request message to surrounding terminal devices (including A₁, A₂, A₃, and A₄). After receiving auxiliary response messages fed back by A₁, A₃, and A₄, T forms the first terminal device group with A₁, A₃, and A₄.

Then, T, A₁, A₃, and A₄ separately report their own downlink channel information to the network device 303.

Next, the network device 303 performs MU-MIMO preprocessing, and determines that A₁ and A₃ can forward a data stream destined for T.

Subsequently, the network device 303 sends the following data streams in parallel by using the MU-MIMO technology:
sends D₁ to T;
sends D₃₁ to A₁; and
sends D₃₃ to A₃.

Finally, A₁ generates D₂₁ after processing D₃₁, and sends D₂₁ to T; A₃ generates D₂₃ after processing D₃₃, and sends D₂₃ to T; and T combines D₁, D₂₁, and D₂₃ and processes a combined data stream.

FIG. 7 is a schematic structural diagram of a first terminal device provided in this application. As shown in FIG. 7, the first terminal device includes:
a transceiver module 701, configured to receive a data stream of the first terminal device from a second terminal device; and
a processing module 702, configured to process the data stream received by the receiving module, where
the second terminal device is configured to receive, from a network device that serves the first terminal device, the data stream that is of the first terminal device and that is sent by the network device by using a multi-user multiple-input multiple-output MU-MIMO technology.

For another optional implementation of the first terminal device, refer to an optional implementation of the foregoing first terminal device 301. The transceiver module 701 may be configured to perform reception and sending operations of the first terminal device 301. The processing module 702 may be configured to perform a processing operation of the first terminal device 301. Specifically, for procedures such as how the processing module 702 determines the second terminal device, and how the transceiver module 701 sends downlink channel information of the first terminal device 301, sends downlink channel information of the second terminal device, receives a control message from the network device, sends a response message to the network device, and receives a downlink data stream forwarded by the second terminal device, refer to a processing procedure of the first terminal device 301 in a process shown in FIG. 5A and FIG. 5B.

The second terminal device that interacts with the first terminal device shown in FIG. 7 may be considered as any one of the foregoing M second terminal devices 302.

Optionally, the processing module 702 is further configured to: before the transceiver module 701 receives the data stream of the first terminal device, determine the second terminal device.

For an optional implementation in which the processing module 702 determines the second terminal device, refer to the three optional solutions, in step S501 in the process shown in FIG. 5A and FIG. 5B, that may be used when the first terminal device 301 determines the second terminal devices 302 that can forward the data stream for the first terminal device 301. Certainly, an implementation in which the processing module 702 determines the second terminal device is not limited to the foregoing three optional solutions, provided that the determined second terminal device can receive a downlink data stream that is of the first terminal device and that is delivered by the network device by using the MU-MIMO technology, and can forward the received downlink data stream to the first terminal device.

Optionally, the transceiver module 701 is further configured to:
after the processing module 702 determines the second terminal device and before the processing module 702 processes the data stream received by the transceiver module 701, send a first auxiliary notification message to the network device, where
the first auxiliary notification message is used to notify the network device that the second terminal device receives data of the first terminal device from the network device.

For an optional implementation in which the transceiver module 701 sends the first auxiliary notification message, refer to step S501 in the process shown in FIG. 5A and FIG. 5B.

Optionally, the transceiver module 701 is further configured to: before the processing module 702 determines the second terminal device, send an auxiliary request message to at least one terminal device, where the auxiliary request message is used to query the at least one terminal device whether the at least one terminal device can receive the data stream of the first terminal device and send the received data stream of the first terminal device to the first terminal device; and
the processing module 702 is specifically configured to: determine a terminal device, in the at least one terminal device, that sends an auxiliary response message, as the second terminal device, where the auxiliary response message is used to notify the first terminal device that the terminal device sending the auxiliary response message can receive the data stream of the first terminal device and send the received data stream of the first terminal device to the first terminal device.

For optional implementations in which the transceiver module 701 sends the auxiliary request message and receives the auxiliary response message, refer to an implementation, in step S501 in the process shown in FIG. 5A and FIG. 5B, in which the first terminal device 301 sends the auxiliary request message to surrounding devices in optional manner 1 that is used when the first terminal device 301 determines the second terminal devices 302 that can forward the data stream for the first terminal device 301. The auxiliary request message sent by the transceiver module 701 may be considered as the auxiliary request message sent by the first terminal device 301 in optional solution 1. The auxiliary response message received by the transceiver module 701 may be considered as the auxiliary response message received by the first terminal device 301 in optional solution 1.

Optionally, the transceiver module 701 is further configured to: before the processing module 702 determines the second terminal device, receive a first control message sent by the network device, where the first control message instructs the first terminal device to determine the second terminal device.

Optionally, the transceiver module 701 is further configured to:
before receiving the data stream of the first terminal device from the second terminal device, send the downlink channel information of the second terminal device to the network device, where the downlink channel information of the second terminal device is used by the network device to send the data stream of the first terminal device to the second terminal device by using the MU-MIMO technology.

In this optional solution, the first terminal device shown in FIG. 7 may be used as the central terminal device described in step S506' in the process shown in FIG. 5A and FIG. 5B, and forwards the downlink channel information of the second terminal device to the network device.

Optionally, the transceiver module 701 is further configured to:
before sending information of a downlink channel between the second terminal device and the network device to the network device, receive a second control message sent by the network device, where the second control message is used to instruct the first terminal device to obtain the downlink channel information of the second terminal device.

Optionally, the transceiver module 701 is further configured to:
after the processing module 702 determines the second terminal device, instruct the second terminal device to send the downlink channel information of the second terminal device to the network device.

Optionally, the transceiver module 701 is further configured to:
send the downlink channel information of the first terminal device to the network device, where the downlink channel information of the first terminal device is used by the network device to send the data stream of the first terminal device to the second terminal device by using the MU-MIMO technology.

Optionally, the second terminal device has a data transmission requirement, or the second terminal device does not have a data transmission requirement.

FIG. 8 is a schematic structural diagram of a first terminal device that uses a specific implementation and that is provided in this application. The transceiver module 701 may be implemented by a transceiver 801 in FIG. 8. The processing module 702 may be implemented by a processor 802 in FIG. 8. The transceiver 801 may receive and send a message and data by using one or more antennas.

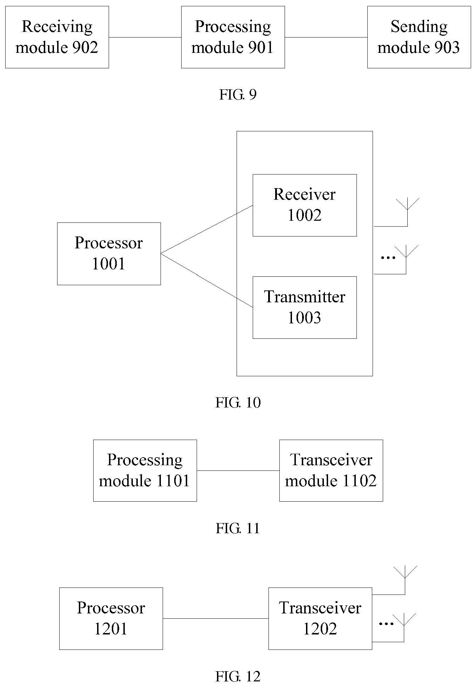

FIG. 9 is a schematic structural diagram of a second terminal device provided in this application. As shown in FIG. 9, the second terminal device includes:
a processing module 901, configured to determine that the second terminal device receives, from a network device that serves a first terminal device, a data stream that is of the first terminal device and that is sent by the network device by using an MU-MIMO technology;
a receiving module 902, configured to receive the data stream that is of the first terminal device and that is sent by the network device by using the MU-MIMO technology; and
a sending module 903, configured to send, to the first terminal device, the data stream that is of the first terminal device and that is received by the receiving module 902.

For another optional implementation of the second terminal device, refer to an optional implementation of the foregoing second terminal device 302. The processing module 901 may be configured to perform a processing operation of the second terminal device 302. The receiving module 902 may be configured to perform a reception operation of the second terminal device 302. The sending module 903 may be configured to perform a sending operation of the second terminal device 302.

For optional procedures of how the second terminal device determines that the second terminal device can forward a downlink data stream for the first terminal device, sends downlink channel information of the second terminal device, receives a control message from the first terminal device or the network device, sends a response message to the first terminal device or the network device, and forwards the downlink data stream to the first terminal device, refer to a processing procedure of the second terminal device 302 in a process shown in FIG. 5A and FIG. 5B.

The second terminal device shown in FIG. 9 may be considered as any one of the foregoing M second terminal devices 302.

Optionally, the sending module 903 is further configured to: before the receiving module 902 receives the data stream of the first terminal device, send the downlink channel information of the second terminal device to the network device, where the downlink channel information of the second terminal device is used by the network device to send the data stream of the first terminal device to the second terminal device by using the MU-MIMO technology.

Optionally, the receiving module 902 is further configured to: before the sending module 903 sends the downlink channel information of the second terminal device to the network device, receive a notification sent by the network device or the first terminal device, where the notification is used to instruct the second terminal device to send the downlink channel information of the second terminal device to the network device.

For an optional implementation, a trigger condition, and the like of reporting, by the sending module 903, the downlink channel information of the second terminal device, refer to processing of the second terminal device 302 in step S503 in the process shown in FIG. 5A and FIG. 5B.

The notification sent by the network device and received by the receiving module 902 may be considered as the channel information reporting request message sent by the network device 303 and described in the foregoing step S503. The notification sent by the first terminal device and received by the receiving module 902 may be considered as the channel information reporting request message sent by the first terminal device 301 and described in the foregoing step S503.

Optionally, the sending module 903 is specifically configured to:
after the processing module 901 confirms that the first terminal device sends downlink channel information of the first terminal device to the network device, send the downlink channel information of the second terminal device to the network device, where the downlink channel information of the second terminal device is used by the network device to send the data stream of the first terminal device to the second terminal device by using the MU-MIMO technology.

Optionally, the sending module 903 is further configured to: before the sending module 903 sends, to the first terminal device, the data stream that is of the first terminal device and that is received by the receiving module 902, send a second auxiliary notification message to the network device, where
the second auxiliary notification message is used to notify that the second terminal device can receive the data stream that is of the first terminal device and that is sent by the network device by using the MU-MIMO technology, and can send the data stream of the first terminal device to the first terminal device.

For an optional implementation in which the sending module 903 sends the second auxiliary notification message, refer to optional implementation 2, in the foregoing step S501, in which the network device 303 determines that the M second terminal devices 302 can forward the data stream for the first terminal device 301.

Optionally, the second terminal device has a data transmission requirement or does not have a data transmission requirement.

FIG. 10 is a schematic structural diagram of a second terminal device that uses a specific implementation and that is provided in this application. The processing module 901 may be implemented by a processor 1001 in FIG. 10. The receiving module 902 may be implemented by a receiver 1002 in FIG. 10. The sending module 903 may be implemented by a transmitter 1003 in FIG. 10. The transmitter 1003 and the receiver 1002 may share one or more antennas. The transmitter 1003 may send a message and data by using the one or more antennas. The receiver 1002 may receive a message and data by using the one or more antennas.

FIG. 11 is a schematic structural diagram of a network device provided in this application. As shown in FIG. 11, the network device includes:
a processing module 1101, configured to determine a second terminal device, where the second terminal device is configured to receive, from the network device, a data stream that is of a first terminal device and that is sent by the network device by using an MU-MIMO technology; and
a transceiver module 1102, configured to send the data stream of the first terminal device to the second terminal device by using the MU-MIMO technology.

For another optional implementation of the network device, refer to an optional implementation of the foregoing network device 303. The processing module 1101 may be configured to perform a processing operation of the network device 303. The transceiver module 1102 may be configured to perform reception and sending operations of the network device 303.

For optional procedures of how the network device determines the second terminal device, receives downlink channel information sent by the first terminal device or the second terminal device, sends a control message to the first terminal device or the second terminal device, receives a response message sent by the first terminal device or the second terminal device, and sends the data stream of the first terminal device to the second terminal device, refer to a processing procedure of the network device 303 in a process shown in FIG. 5A and FIG. 5B.

For an optional implementation in which the processing module 1101 determines the second terminal device, refer to the optional implementation, in the foregoing step S501, in which the network device 303 determines the M second terminal devices 302.

The second terminal device that interacts with the network device shown in FIG. 11 may be considered as any one of the foregoing M second terminal devices 302.

Optionally, the transceiver module 1102 is further configured to: before the processing module 1101 determines the second terminal device, send a first control message to the first terminal device, where the first control message instructs the first terminal device to determine the second terminal device; and receive, from the first terminal device, a first auxiliary notification message that is sent by the first terminal device in response to the first control message, where the first auxiliary notification message is used to notify the network device that the second terminal device receives data of the first terminal device from the network device; and
the processing module 1101 is specifically configured to determine the second terminal device based on the notification message received by the transceiver module 1102.

Optionally, the transceiver module 1102 is further configured to: before the processing module 1101 determines the second terminal device, receive a second auxiliary notification message sent by the second terminal device, where the second auxiliary notification message is used to notify the network device that the second terminal device can receive the data stream that is of the first terminal device and that is sent by the network device by using the MU-MIMO technology, and can send the data stream of the first terminal device to the first terminal device; and
the processing module 1101 is specifically configured to determine the second terminal device based on the second auxiliary notification message.

For optional implementations in which the network device shown in FIG. 11 receives the second auxiliary notification message and determines the second terminal device based on the second auxiliary notification message, refer to optional implementation 2, in the foregoing step S501, in which the network device 303 determines that the M second terminal devices 302 can forward the data stream for the first terminal device 301.

Optionally, the transceiver module 1102 is further configured to: before sending the data stream of the first terminal device to the second terminal device by using the MU-MIMO technology,
send a second control message to the first terminal device, where the second control message is used to instruct the first terminal device to obtain downlink channel information of the second terminal device; and
receive the downlink channel information that is of the second terminal device and that is sent by the first terminal device in response to the second control message, where the downlink channel information of the second terminal device is used by the network device to send the data stream of the first terminal device to the second terminal device by using the MU-MIMO technology.

Optionally, the transceiver module 1102 is further configured to:
before sending the data stream of the first terminal device to the second terminal device by using the MU-MIMO technology, receive downlink channel information of the second terminal device sent by the second terminal device, where
the downlink channel information of the second terminal device is used by the network device to send the data stream of the first terminal device to the second terminal device by using the MU-MIMO technology.

Optionally, the transceiver module 1102 is further configured to:
before sending the data stream of the first terminal device to the second terminal device by using the MU-MIMO technology, receive downlink channel information of the first terminal device sent by the first terminal device, where
the downlink channel information of the first terminal device is used by the network device to send the data stream of the first terminal device to the second terminal device by using the MU-MIMO technology.

Optionally, the second terminal device has a data transmission requirement, or the second terminal device does not have a data transmission requirement.

FIG. 12 is a schematic structural diagram of a network device that uses a specific implementation and that is provided in this application. The transceiver module 1102 may be implemented by a transceiver 1202 in FIG. 12. The processing module 1101 may be implemented by a processor 1201 in FIG. 12. The transceiver 1202 may receive and send a message and data by using a plurality of antennas.

In the first terminal device 301, the second terminal devices 302, and the network device 303 that are provided in the foregoing embodiments, and in a method performed by the first terminal device 301, the second terminal devices 302, and the network device 303, when the network device sends the data stream of the first terminal device 301, in this implementation, the second terminal device participates in MU-MIMO downlink data transmission of the first terminal device. Even if only the data stream of the first terminal device is transmitted or only a relatively small amount of data of the second terminal device is transmitted, a channel between the second terminal device and the network device is not wasted, and instead, is used to help transmit the data stream of the first terminal device. This avoids occurrence of a problem that MU-MIMO is downgraded to SU-MIMO because the network device cannot deliver data streams to a plurality of terminal devices by using the MU-MIMO technology, thereby increasing a throughput of a communications system. In addition, this also avoids that, in a scenario in which a plurality of terminal devices simultaneously have a data transmission requirement but some terminal devices have a relatively low data transmission requirement, transmission capabilities of the terminal devices that have a relatively low data transmission requirement are not fully utilized, thereby also increasing the throughput of the communications system.

Persons skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, and an optical memory) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some embodiments of the present invention have been described, persons skilled in the art can make changes and modifications to these embodiments once they learn of the basic inventive concept. Therefore, the following claims are intended to be construed as to cover the embodiments and all changes and modifications falling within the scope of the present invention.

Obviously, persons skilled in the art can make various modifications and variations to the embodiments of the present invention without departing from the scope of the embodiments of the present invention. The present invention is intended to cover these modifications and variations provided that they fall within the scope of protection defined by the following claims and their equivalent technologies.

## Claims

1. A first terminal device comprising a transceiver module (701) and a processing module (702), wherein:
• the transceiver module (701) is configured to receive a control message from a network device (303), wherein the control message instructs the first terminal device to determine at least one second terminal device that is to forward a data stream from the network device (303) to the first terminal device, and the control message contains identification information of the first terminal device;
• the processing module (702) is configured to trigger based on the identification information of the first terminal device a determination of the at least one second terminal device;
• the transceiver module (701) is configured to, for the determination of the at least one second terminal device, broadcast an auxiliary request message to M terminal device forming the at least one second terminal device, with M being a positive integer, by using one of:
∘ a Device-to-Device, D2D, protocol of the 3^{rd} Generation Partnership Project, 3GPP, or
∘ a Wireless Fidelity, Wi-Fi, protocol of the Institute of Electrical and Electronics Engineers, IEEE,
wherein the auxiliary request message is used to query each terminal device among the M terminal devices whether the terminal device can receive the data stream from the network device (303) destined for the first terminal device and can forward the data stream destined for the first terminal device to the first terminal device;
• the transceiver module (701) is configured to receive from each terminal device among the M terminal devices an auxiliary response message used to notify the first terminal device that the terminal device sending the auxiliary response message can forward the data stream destined for the first terminal device;
• the processing module (702) is configured to determine that the M terminal devices can forward the data stream destined for the first terminal device;
• the transceiver module (701) is configured to send an auxiliary notification message to the network device (303), wherein the auxiliary notification message is used to indicate that the M second terminal devices can forward the data stream destined for the first terminal device to the first terminal device;
• the transceiver module (701) is configured to:
∘ receive a channel information reporting request message from the network device (303), wherein the channel information reporting request message is used to request a reporting of downlink channel information of a downlink channel between the first terminal device and the network device (303), and subsequently send the downlink channel information to the network device (303), or,
∘ send the downlink channel information to the network device (303) periodically;
• the transceiver module (701) is configured to receive, from each terminal device among N terminal devices, a corresponding first data stream, wherein a sum of the first data streams forms a second data stream destined for being sent from the network device (303) to the first terminal device via the N terminal devices, wherein N ≤ M, and N and M are positive integers;
• a processing module (702) configured to process the first data streams received by the transceiver module (701).

2. A first terminal device comprising a transceiver module (701) and a processing module (702), wherein:
• the transceiver module (701) is configured to receive a control message from a network device (303), wherein the control message instructs the first terminal device to determine at least one second terminal device that is to forward a data stream from the network device (303) to the first terminal device, and the control message contains identification information of the first terminal device;
• the processing module (702) is configured to trigger based on the identification information of the first terminal device a determination of the at least one second terminal device;
• the transceiver module (701) is configured to, for the determination of the at least one second terminal device, receive by using one of:
∘ a Device-to-Device, D2D, protocol of the 3^{rd} Generation Partnership Project, 3GPP, or
∘ a Wireless Fidelity, Wi-Fi, protocol of the Institute of Electrical and Electronics Engineers, IEEE
from each of M terminal devices forming the at least one second terminal an auxiliary indication message, wherein the auxiliary indication message is used to indicate that the terminal device having sent the auxiliary indication message can forward the data stream destined for the first terminal device from the network device (303) to the first terminal device, with M being a positive integer;
• the processing module (702) is configured to determine that the M terminal devices can forward the data stream destined for the first terminal device based on the received auxiliary indication messages;
• the transceiver module (701) is configured to send an auxiliary notification message to the network device (303), wherein the auxiliary notification message is used to indicate that the M second terminal devices can forward the data stream destined for the first terminal device to the first terminal device;
• the transceiver module (701) is configured to:
∘ receive a channel information reporting request message from the network device (303), wherein the channel information reporting request message is used to request a reporting of downlink channel information of a downlink channel between the first terminal device and the network device (303), and subsequently send the downlink channel information to the network device (303), or,
∘ send the downlink channel information to the network device (303) periodically;
• the transceiver module (701) is configured to receive, from each terminal device among N terminal devices, a corresponding first data stream, wherein a sum of the first data streams forms a second data stream destined for being sent from the network device (303) to the first terminal device via the N terminal devices, wherein N ≤ M, and N and M are positive integers;
• a processing module (702) configured to process the first data streams received by the transceiver module (701).

3. A first terminal device comprising a transceiver module (701) and a processing module (702), wherein:
• the transceiver module (701) is configured to receive a control message from a network device (303), wherein the control message is used to instruct the first terminal device to determine at least one second terminal device that is to forward a data stream from the network device (303) to the first terminal device, and the first control message contains identification information of the first terminal device;
• the processing module (702) is configured to trigger based on the identification information of the first terminal device a determination of the at least one second terminal device;
• the transceiver module (701) is configured to receive by using one of:
∘ a Device-to-Device, D2D, protocol of the 3^{rd} Generation Partnership Project, 3GPP, or
∘ a Wireless Fidelity, Wi-Fi, protocol of the Institute of Electrical and Electronics Engineers, IEEE
from each of a plurality of terminal devices an auxiliary indication message, wherein the auxiliary indication message is used to indicate that a terminal device sending the auxiliary indication message expects to forward the data stream destined for the first terminal device;
• the processing module (702) is configured to determine that M terminal devices among the plurality of terminal devices meet one of the following conditions, with M being a positive integer:
∘ a data transmission rate between the terminal device and the first terminal device is greater than a data transmission rate threshold;
∘ a distance between the terminal device and the first terminal device is less than a distance threshold,
thereby determining that the M terminal devices, forming the network device (303), can forward the data stream destined for the first terminal device;
• the transceiver module (701) is configured to send an auxiliary notification message to the network device (303), wherein the auxiliary notification message is used to indicate that the M second terminal devices can forward the data stream destined for the first terminal device to the first terminal device;
• the transceiver module (701) is configured to:
∘ receive a channel information reporting request message from the network device (303), wherein the channel information reporting request message is used to request a reporting of downlink channel information of a downlink channel between the first terminal device and the network device (303), and subsequently sent the downlink channel information to the network device (303), or,
∘ send the downlink channel information to the network device (303) periodically;
• the transceiver module (701) is configured to receive, from each terminal device among N terminal devices, a corresponding first data stream, wherein a sum of the first data streams forms a second data stream destined for being sent from the network device (303) to the first terminal device via the N terminal devices, wherein N ≤ M, and N and M are positive integers;
• a processing module (702) configured to process the first data streams received by the transceiver module (701).

## Patentansprüche

1. Erste Endgeräteeinrichtung, umfassend ein Sendeempfängermodul (701) und ein Verarbeitungsmodul (702), wobei
das Sendeempfängermodul (701) dafür ausgelegt ist, eine Steuernachricht von einer Netzwerkeinrichtung (303) zu empfangen, wobei die Steuernachricht die erste Endgeräteeinrichtung anweist, mindestens eine zweite Endgeräteeinrichtung zu ermitteln, die einen Datenstrom von der Netzwerkeinrichtung (303) zu der ersten Endgeräteeinrichtung weiterleiten soll, und die Steuernachricht Identifizierungsinformationen der ersten Endgeräteeinrichtung enthält;
das Verarbeitungsmodul (702) dafür ausgelegt ist, basierend auf den Identifizierungsinformationen der ersten Endgeräteeinrichtung eine Feststellung der mindestens einen zweiten Endgeräteeinrichtung auszulösen;
das Sendeempfängermodul (701) dafür ausgelegt ist, für die Feststellung der mindestens einen zweiten Endgeräteeinrichtung eine Hilfs-Anforderungsnachricht zu M Endgeräteeinrichtungen zu senden, die mindestens eine zweite Endgeräteeinrichtung bilden, wobei M eine positive Ganzzahl ist, unter Verwendung von einem von
einem Einrichtung-zu-Einrichtung-, D2D-, -Protokoll des "3rd Generation Partnership Project", 3GPP, oder
einem "Wireless Fidelity"-, WiFi-, -Protokoll des "Institute of Electrical and Electronics Engineers", IEEE,
wobei die Hilfs-Anforderungsnachricht verwendet wird, um jede Endgeräteeinrichtung unter den M Endgeräteeinrichtungen danach abzufragen, ob die Endgeräteeinrichtung den für die erste Endgeräteeinrichtung bestimmten Datenstrom von der Netzwerkeinrichtung (303) empfangen und den für die erste Endgeräteeinrichtung bestimmten Datenstrom zu der ersten Endgeräteeinrichtung weiterleiten kann;
das Sendeempfängermodul (701) dafür ausgelegt ist, von jeder Endgeräteeinrichtung unter den M Endgeräteeinrichtungen eine Hilfs-Antwortnachricht zu empfangen, verwendet zum Benachrichtigen der ersten Endgeräteeinrichtung, dass die Endgeräteeinrichtung, die die Hilfs-Antwortnachricht sendet, den für die erste Endgeräteeinrichtung bestimmten Datenstrom weiterleiten kann;
das Verarbeitungsmodul (702) dafür ausgelegt ist, festzulegen, dass die M Endgeräteeinrichtungen den für die erste Endgeräteeinrichtung bestimmten Datenstrom weiterleiten können;
das Sendeempfängermodul (701) dafür ausgelegt ist, eine Hilfs-Benachrichtigungsnachricht zu der Netzwerkeinrichtung (303) zu senden, wobei die Hilfs-Benachrichtigungsnachricht verwendet wird, um anzugeben, dass die M zweiten Endgeräteeinrichtungen den für die erste Endgeräteeinrichtung bestimmten Datenstrom zu der ersten Endgeräteeinrichtung weiterleiten können;
das Sendeempfängermodul (701) dafür ausgelegt ist,
eine Kanalinformations-Berichtsanforderungsnachricht von der Netzwerkeinrichtung (303) zu empfangen, wobei die Kanalinformations-Berichtsanforderungsnachricht verwendet wird, um einen Bericht von Downlink-Kanalinformationen eines Downlink-Kanals zwischen der ersten Endgeräteeinrichtung und der Netzwerkeinrichtung (303) anzufordern und anschließend die Downlink-Kanalinformationen zu der Netzwerkeinrichtung (303) zu senden oder periodisch die Downlink-Kanalinformationen zu der Netzwerkeinrichtung (303) zu senden;
das Sendeempfängermodul (701) dafür ausgelegt ist, von jeder Endgeräteeinrichtung unter N Endgeräteeinrichtungen einen entsprechenden ersten Datenstrom zu empfangen, wobei eine Summe der ersten Datenströme einen zweiten Datenstrom bildet, bestimmt zum Senden von der Netzwerkeinrichtung (303) zu der ersten Endgeräteeinrichtung über die N Endgeräteeinrichtungen, wobei N ≤ M und N und M positive Ganzzahlen sind;
ein Verarbeitungsmodul (702) dafür ausgelegt ist, die von dem Sendeempfängermodul (701) empfangenen ersten Datenströme zu verarbeiten.

2. Erste Endgeräteeinrichtung, umfassend ein Sendeempfängermodul (701) und ein Verarbeitungsmodul (702), wobei
das Sendeempfängermodul (701) dafür ausgelegt ist, eine Steuernachricht von einer Netzwerkeinrichtung (303) zu empfangen, wobei die Steuernachricht die erste Endgeräteeinrichtung anweist, die mindestens eine zweite Endgeräteeinrichtung zu ermitteln, die einen Datenstrom von der Netzwerkeinrichtung (303) zu der ersten Endgeräteeinrichtung weiterleiten soll, und die Steuernachricht Identifizierungsinformationen der ersten Endgeräteeinrichtung enthält;
das Verarbeitungsmodul (702) dafür ausgelegt ist, basierend auf den Identifizierungsinformationen der ersten Endgeräteeinrichtung eine Feststellung der mindestens einen zweiten Endgeräteeinrichtung auszulösen;
das Sendeempfängermodul (701) dafür ausgelegt ist, zur Feststellung der mindestens einen zweiten Endgeräteeinrichtung eine Hilfs-Angabenachricht zu empfangen unter Verwendung
eines Einrichtung-zu-Einrichtung-, D2D-, -Protokolls des "3rd Generation Partnership Project", 3GPP, oder
eines "Wireless Fidelity"-, WiFi-, -Protokolls des "Institute of Electrical and Electronics Engineers", IEEE,
von jeder der M Endgeräteeinrichtungen, die das mindestens eine zweite Endgerät bilden, wobei die Hilfs-Angabenachricht verwendet wird, um anzugeben, dass die Endgeräteeinrichtung, die die Hilfs-Angabenachricht gesendet hat, den für die erste Endgeräteeinrichtung bestimmten Datenstrom von der Netzwerkeinrichtung (303) zu der ersten Endgeräteeinrichtung weiterleiten kann, wobei M eine positive Ganzzahl ist;
das Verarbeitungsmodul (702) dafür ausgelegt ist, festzulegen, dass die M Endgeräteeinrichtungen den für die erste Endgeräteeinrichtung bestimmten Datenstrom basierend auf den empfangenen Hilfs-Angabenachrichten weiterleiten können;
das Sendeempfängermodul (701) dafür ausgelegt ist, eine Hilfs-Benachrichtigungsnachricht zu der Netzwerkeinrichtung (303) zu senden, wobei die Hilfs-Benachrichtigungsnachricht verwendet wird, um anzugeben, dass die M zweiten Endgeräteeinrichtungen den für die erste Endgeräteeinrichtung bestimmten Datenstrom zu der ersten Endgeräteeinrichtung weiterleiten können;
das Sendeempfängermodul (701) ausgelegt ist zum
Empfangen einer Kanalinformations-Berichtsanforderungsnachricht von der Netzwerkeinrichtung (303), wobei die Kanalinformations-Berichtsanforderungsnachricht verwendet wird, um einen Bericht von Downlink-Kanalinformationen eines Downlink-Kanals zwischen der ersten Endgeräteeinrichtung und der Netzwerkeinrichtung (303) anzufordern und anschließend die Downlink-Kanalinformationen zu der Netzwerkeinrichtung (303) zu senden, oder
periodischen Senden der Downlink-Kanalinformationen zu der Netzwerkeinrichtung (303);
das Sendeempfängermodul (701) dafür ausgelegt ist, von jeder Endgeräteeinrichtung unter N Endgeräteeinrichtungen einen entsprechenden ersten Datenstrom zu empfangen, wobei eine Summe der ersten Datenströme einen zweiten Datenstrom bildet, bestimmt zum Senden von der Netzwerkeinrichtung (303) zu der ersten Endgeräteeinrichtung über die N Endgeräteeinrichtungen, wobei N ≤ M und N und M positive Ganzzahlen sind;
ein Verarbeitungsmodul (702) dafür ausgelegt ist, die von dem Sendeempfängermodul (701) empfangenen ersten Datenströme zu verarbeiten.

3. Erste Endgeräteeinrichtung, umfassend ein Sendeempfängermodul (701) und ein Verarbeitungsmodul (702), wobei
das Sendeempfängermodul (701) dafür ausgelegt ist, eine Steuernachricht von einer Netzwerkeinrichtung (303) zu empfangen, wobei die Steuernachricht verwendet wird, um die erste Endgeräteeinrichtung anzuweisen, mindestens eine zweite Endgeräteeinrichtung zu ermitteln, die einen Datenstrom von der Netzwerkeinrichtung (303) zu der ersten Endgeräteeinrichtung weiterleiten soll, und die erste Steuernachricht Identifizierungsinformationen der ersten Endgeräteeinrichtung enthält;
das Verarbeitungsmodul (702) dafür ausgelegt ist, basierend auf den Identifizierungsinformationen der ersten Endgeräteeinrichtung eine Feststellung der mindestens einen zweiten Endgeräteeinrichtung auszulösen;
das Sendeempfängermodul (701) dafür ausgelegt ist, von jeder einer Mehrzahl von Endgeräteeinrichtungen eine Hilfs-Angabenachricht zu empfangen unter Verwendung von einem von
einem Einrichtung-zu-Einrichtung-, D2D-, -Protokoll des "3rd Generation Partnership Project", 3GPP, oder
einem "Wireless Fidelity"-, WiFi-, -Protokoll des "Institute of Electrical and Electronics Engineer", IEEE,
wobei die Hilfs-Anforderungsnachricht verwendet wird, um anzugeben, dass eine Endgeräteeinrichtung, die die Hilfs-Angabenachricht sendet, erwartet, den für die erste Endgeräteeinrichtung bestimmten Datenstrom weiterzuleiten;
das Verarbeitungsmodul (702) dafür ausgelegt ist, festzustellen, dass die M Endgeräteeinrichtungen unter der Mehrzahl von Endgeräteeinrichtungen eine der folgenden Bedingungen erfüllen, wobei M eine positive Ganzzahl ist:
eine Datenübertragungsrate zwischen der Endgeräteeinrichtung und der ersten Endgeräteeinrichtung ist größer als ein Schwellenwert der Datenübertragungsrate;
eine Distanz zwischen der Endgeräteeinrichtung und der ersten Endgeräteeinrichtung ist geringer als ein Schwellenwert der Distanz,
wodurch festgestellt wird, dass die M Endgeräteeinrichtungen, die die Netzwerkeinrichtung (303) bilden, den für die erste Endgeräteeinrichtung bestimmten Datenstrom weiterleiten können;
das Sendeempfängermodul (701) dafür ausgelegt ist, eine Hilfs-Benachrichtigungsnachricht zu der Netzwerkeinrichtung (303) zu senden, wobei die Hilfs-Benachrichtigungsnachricht verwendet wird, um anzugeben, dass die M zweiten Endgeräteeinrichtungen den für die erste Endgeräteeinrichtung bestimmten Datenstrom zu der ersten Endgeräteeinrichtung weiterleiten können;
das Sendeempfängermodul (701) ausgelegt ist zum
Empfangen einer Kanalinformations-Berichtsanforderungsnachricht von der Netzwerkeinrichtung (303), wobei die Kanalinformations-Berichtsanforderungsnachricht verwendet wird, um einen Bericht von Downlink-Kanalinformationen eines Downlink-Kanals zwischen der ersten Endgeräteeinrichtung und der Netzwerkeinrichtung (303) anzufordern und anschließend die Downlink-Kanalinformationen zu der Netzwerkeinrichtung (303) zu senden, oder
periodischen Senden der Downlink-Kanalinformationen zu der Netzwerkeinrichtung (303);
das Sendeempfängermodul (701) dafür ausgelegt ist, von jeder Endgeräteeinrichtung unter N Endgeräteeinrichtungen einen entsprechenden ersten Datenstrom zu empfangen, wobei eine Summe der ersten Datenströme einen zweiten, zum Senden von der Netzwerkeinrichtung (303) zu der ersten Endgeräteeinrichtung über die N Endgeräteeinrichtungen bestimmten Datenstrom zu bilden, wobei N ≤ M und N und M positive Ganzzahlen sind;
ein Verarbeitungsmodul (702) dafür ausgelegt ist, die von dem Sendeempfängermodul (701) empfangenen ersten Datenströme zu verarbeiten.

## Revendications

1. Premier dispositif terminal comprenant un module émetteur-récepteur (701) et un module de traitement (702), et dans lequel :
le module émetteur-récepteur (701) est configuré pour recevoir un message de contrôle en provenance d'un dispositif de réseau (303), le message de contrôle donnant l'instruction au premier dispositif terminal de déterminer au moins un second dispositif terminal chargé de transférer un flux de données du dispositif de réseau (303) au premier dispositif terminal, et le message de contrôle contenant une information d'identification du premier dispositif terminal ;
le module de traitement (702) est configuré pour déclencher, sur la base de l'information d'identification du premier dispositif terminal, une détermination de l'au moins un second dispositif terminal ;
le module émetteur-récepteur (701) est configuré pour, pour la détermination de l'au moins un second dispositif terminal, diffuser un message de demande auxiliaire vers M dispositifs terminaux formant l'au moins un second dispositif terminal, M étant un entier positif, au moyen d'un protocole parmi :
un protocole de dispositif à dispositif (D2D) du 3rd Generation Partnership Project (3GPP) et
un protocole de fidélité sans fil (Wi-Fi) de l'Institut de l'ingénierie électrique et électronique (IEEE),
le message de demande auxiliaire étant utilisé pour demander, à chaque dispositif terminal parmi les M dispositifs terminaux, si le dispositif terminal peut recevoir en provenance du dispositif de réseau (303) le flux de données destiné au premier dispositif terminal et peut transférer au premier dispositif terminal le flux de données destiné au premier dispositif terminal ;
le module émetteur-récepteur (701) est configuré pour recevoir, en provenance de chaque dispositif terminal parmi les M dispositifs terminaux, un message de réponse auxiliaire utilisé pour notifier au premier dispositif terminal que le dispositif terminal envoyant le message de réponse auxiliaire peut transférer le flux de données destiné au premier dispositif terminal ;
le module de traitement (702) est configuré pour déterminer que les M dispositifs terminaux peuvent transférer le flux de données destiné au premier dispositif terminal ;
le module émetteur-récepteur (701) est configuré pour envoyer un message de notification auxiliaire au dispositif de réseau (303), le message de notification auxiliaire étant utilisé pour indiquer que les M seconds dispositifs terminaux peuvent transférer au premier dispositif terminal le flux de données destiné au premier dispositif terminal ;
le module émetteur-récepteur (701) est configuré pour :
recevoir un message de demande de signalement d'information de canal en provenance du dispositif de réseau (303), le message de demande de signalement d'information de canal étant utilisé pour demander un signalement d'une information de canal en liaison descendante d'un canal en liaison descendante entre le premier dispositif terminal et le dispositif de réseau (303), puis envoyer l'information de canal en liaison descendante au dispositif de réseau (303), ou
envoyer périodiquement l'information de canal en liaison descendante au dispositif de réseau (303) ;
le module émetteur-récepteur (701) est configuré pour recevoir, en provenance de chaque dispositif terminal parmi N dispositifs terminaux, un premier flux de données correspondant, une somme des premiers flux de données formant un second flux de données destiné à être envoyé du dispositif de réseau (303) au premier dispositif terminal par l'intermédiaire des N dispositifs terminaux, N ≤ M et N et M étant des entiers positifs ;
un module de traitement (702), configuré pour traiter les premiers flux de données reçus par le module émetteur-récepteur (701).

2. Premier dispositif terminal comprenant un module émetteur-récepteur (701) et un module de traitement (702), et dans lequel :
le module émetteur-récepteur (701) est configuré pour recevoir un message de contrôle en provenance d'un dispositif de réseau (303), le message de contrôle donnant l'instruction au premier dispositif terminal de déterminer au moins un second dispositif terminal chargé de transférer un flux de données du dispositif de réseau (303) au premier dispositif terminal, et le message de contrôle contenant une information d'identification du premier dispositif terminal ;
le module de traitement (702) est configuré pour déclencher, sur la base de l'information d'identification du premier dispositif terminal, une détermination de l'au moins un second dispositif terminal ;
le module émetteur-récepteur (701) est configuré pour, pour la détermination de l'au moins un second dispositif terminal, recevoir, au moyen d'un protocole parmi :
un protocole de dispositif à dispositif (D2D) du 3rd Generation Partnership Project (3GPP) et
un protocole de fidélité sans fil (Wi-Fi) de l'Institut de l'ingénierie électrique et électronique (IEEE),
en provenance de chacun des M dispositifs terminaux formant l'au moins un second dispositif terminal, un message d'indication auxiliaire, le message d'indication auxiliaire étant utilisé pour indiquer que le dispositif terminal ayant envoyé le message d'indication auxiliaire peut transférer du dispositif de réseau (303) au premier dispositif terminal le flux de données destiné au premier dispositif terminal, M étant un entier positif ;
le module de traitement (702) est configuré pour déterminer que les M dispositifs terminaux peuvent transférer le flux de données destiné au premier dispositif terminal sur la base des messages d'indication auxiliaires reçus ;
le module émetteur-récepteur (701) est configuré pour envoyer un message de notification auxiliaire au dispositif de réseau (303), le message de notification auxiliaire étant utilisé pour indiquer que les M seconds dispositifs terminaux peuvent transférer au premier dispositif terminal le flux de données destiné au premier dispositif terminal ;
le module émetteur-récepteur (701) est configuré pour :
recevoir un message de demande de signalement d'information de canal en provenance du dispositif de réseau (303), le message de demande de signalement d'information de canal étant utilisé pour demander un signalement d'une information de canal en liaison descendante d'un canal en liaison descendante entre le premier dispositif terminal et le dispositif de réseau (303), puis envoyer l'information de canal en liaison descendante au dispositif de réseau (303), ou
envoyer périodiquement l'information de canal en liaison descendante au dispositif de réseau (303) ;
le module émetteur-récepteur (701) est configuré pour recevoir, en provenance de chaque dispositif terminal parmi N dispositifs terminaux, un premier flux de données correspondant, une somme des premiers flux de données formant un second flux de données destiné à être envoyé du dispositif de réseau (303) au premier dispositif terminal par l'intermédiaire des N dispositifs terminaux, N ≤ M et N et M étant des entiers positifs ;
un module de traitement (702), configuré pour traiter les premiers flux de données reçus par le module émetteur-récepteur (701).

3. Premier dispositif terminal comprenant un module émetteur-récepteur (701) et un module de traitement (702), et dans lequel :
le module émetteur-récepteur (701) est configuré pour recevoir un message de contrôle en provenance d'un dispositif de réseau (303), le message de contrôle étant utilisé pour donner l'instruction au premier dispositif terminal de déterminer au moins un second dispositif terminal chargé de transférer un flux de données du dispositif de réseau (303) au premier dispositif terminal, et le premier message de contrôle contenant une information d'identification du premier dispositif terminal ;
le module de traitement (702) est configuré pour déclencher, sur la base de l'information d'identification du premier dispositif terminal, une détermination de l'au moins un second dispositif terminal ;
le module émetteur-récepteur (701) est configuré pour recevoir, au moyen d'un protocole parmi :
un protocole de dispositif à dispositif (D2D) du 3rd Generation Partnership Project (3GPP) et
un protocole de fidélité sans fil (Wi-Fi) de l'Institut de l'ingénierie électrique et électronique (IEEE),
en provenance de chaque dispositif terminal d'une pluralité de dispositifs terminaux, un message d'indication auxiliaire, le message d'indication auxiliaire étant utilisé pour indiquer qu'un dispositif terminal envoyant le message d'indication auxiliaire prévoit de transférer le flux de données destiné au premier dispositif terminal ;
le module de traitement (702) est configuré pour déterminer que M dispositifs terminaux parmi la pluralité de dispositifs terminaux satisfont à une des conditions suivantes, M étant un entier positif :
un débit de transmission de données entre le dispositif terminal et le premier dispositif terminal est supérieur à un seuil de débit de transmission de données ;
une distance entre le dispositif terminal et le premier dispositif terminal est inférieure à un seuil de distance,
déterminant ainsi que les M dispositifs terminaux, formant le dispositif de réseau (303), peuvent transférer le flux de données destiné au premier dispositif terminal ;
le module émetteur-récepteur (701) est configuré pour envoyer un message de notification auxiliaire au dispositif de réseau (303), le message de notification auxiliaire étant utilisé pour indiquer que les M seconds dispositifs terminaux peuvent transférer au premier dispositif terminal le flux de données destiné au premier dispositif terminal ;
le module émetteur-récepteur (701) est configuré pour :
recevoir un message de demande de signalement d'information de canal en provenance du dispositif de réseau (303), le message de demande de signalement d'information de canal étant utilisé pour demander un signalement d'une information de canal en liaison descendante d'un canal en liaison descendante entre le premier dispositif terminal et le dispositif de réseau (303), puis envoyer l'information de canal en liaison descendante au dispositif de réseau (303), ou
envoyer périodiquement l'information de canal en liaison descendante au dispositif de réseau (303) ;
le module émetteur-récepteur (701) est configuré pour recevoir, en provenance de chaque dispositif terminal parmi N dispositifs terminaux, un premier flux de données correspondant, une somme des premiers flux de données formant un second flux de données destiné à être envoyé du dispositif de réseau (303) au premier dispositif terminal par l'intermédiaire des N dispositifs terminaux, N ≤ M et N et M étant des entiers positifs ;
un module de traitement (702), configuré pour traiter les premiers flux de données reçus par le module émetteur-récepteur (701).
